# EUROPEAN PATENT APPLICATION

(11) **EP 4 800 426 A1**
(43) Date of publication of application: **02.09.2026**
(21) Application number: 24882212.4
(22) Date of filing: 10.10.2024
(51) Int. Cl.: G01S 7/03, G01S 13/06, G01S 13/76

(54) **SIGNAL PROCESSING DEVICE, MEASUREMENT DEVICE, AND SIGNAL PROCESSING METHOD**

(30) Priority: 24.10.2023 JP 2023182424
(71) Applicant: Sony Semiconductor Solutions Corporation, Atsugi-shi, Kanagawa 243-0014 (JP)
(72) Inventor: KOZAKAI Osamu, Atsugi-shi, Kanagawa 243-0014 (JP)
(74) Representative: MFG Patentanwälte Meyer-Wildhagen Meggle-Freund Gerhard PartG mbB
(86) International application number: PCT/JP2024/036297
(87) International publication number: WO 2025/089099

(57) **Abstract**

A main object of the present technology is to provide a signal processing device, a measurement device, and a signal processing method capable of improving spatial resolution with a simple configuration.

The present technology provides a signal processing device including: a reception unit that receives a signal from an object; a reflection unit that reflects the signal toward the object or the reception unit; and a calculation unit that calculates position information on the object, in which the calculation unit calculates the position information on the basis of the signal received by the reception unit and a positional relationship between the reception unit and the reflection unit. The reflection unit may selectively reflect the signal.

## Description

### TECHNICAL FIELD

The technology according to the present disclosure (hereinafter also referred to as "the present technology") relates to a signal processing device, a measurement device, and a signal processing method.

### BACKGROUND ART

In recent years, a technology for measuring biological information of a human using radar signals has been researched and developed. In addition, a technology for measuring a distance between a plurality of points using a wireless communication signal has been researched and developed.

Since the radar signal can measure minute displacement due to a change in phase, displacement of a human body surface associated with, for example, respiration, heart rate, or the like can be detected.

For example, Patent Document 1 discloses "a signal processing device including: a reception processing unit that receives a response to a predetermined signal transmitted from a transmission antenna; and a determination unit that determines the plurality of measuring objects by response to a plurality of signals corresponding to a second direction having a predetermined range different from a first direction having a predetermined range". With this configuration, it is described that the plurality of measuring objects can be distinguished and measured.

### CITATION LIST

### PATENT DOCUMENT

Patent Document 1: Japanese Patent Application Laid-Open No. 2018-72171

### SUMMARY OF THE INVENTION

### PROBLEMS TO BE SOLVED BY THE INVENTION

In a case where displacement of a human body surface is measured using a radar signal, it is required to improve spatial resolution in order to accurately measure each displacement of a measurement object in proximity. Examples of spatial resolution obtained by the radar include distance resolution and angle resolution. The distance resolution is determined by the bandwidth of the radar signal, and the angle resolution is determined by the number of antenna elements.

Bandwidths of usable radar signals are regulated, and increasing the number of antenna elements leads to an increase in size and cost of the device. Therefore, it is difficult to improve the spatial resolution. This similarly applies to wireless communication.

Therefore, a main object of the present technology is to provide a signal processing device, a measurement device, and a signal processing method capable of improving spatial resolution with a simple configuration.

### SOLUTIONS TO PROBLEMS

The present technology provides a signal processing device including:
a reception unit that receives a signal from an object;
a reflection unit that reflects the signal toward the object or the reception unit; and
a calculation unit that calculates position information on the object, in which
the calculation unit calculates the position information on the basis of the signal received by the reception unit and a positional relationship between the reception unit and the reflection unit.

The reflection unit may selectively reflect the signal.

The calculation unit may select reflection or non-reflection of the reflection unit on the basis of a comparison result between the signal received by the reception unit in a case where the reflection unit reflects the signal and the signal received by the reception unit in a case where the reflection unit does not reflect the signal.

The reflection unit may be arranged at a position farther than the reception unit with respect to the object.

When the signal is a radar signal,
the reception unit may receive a first radar signal transmitted from a transmission unit to an object and reflected by the object,
the reflection unit may reflect the first radar signal toward the object, and
the calculation unit may calculate position information on the object on the basis of the first radar signal, a second radar signal obtained by reflecting the first radar signal by the object, and a positional relationship between the reception unit and the reflection unit.

The signal processing device may further include a plurality of the reception units, in which
the calculation unit calculates position information on the object on the basis of a positional relationship between the reception units and the first radar signal and the second radar signal received by the reception units.

When the signal is a wireless communication signal, the reception unit may be a first transmission/reception unit, and the object is a second transmission/reception unit,
the first transmission/reception unit may transmit the wireless communication signal toward the second transmission/reception unit,
the second transmission/reception unit may receive the wireless communication signal from the first transmission/reception unit and transmits a first wireless communication signal toward the first transmission/reception unit and the reflection unit,
the reflection unit may reflect the wireless communication signal from the second transmission/reception unit toward the first transmission/reception unit, and
the calculation unit may calculate position information on the second transmission/reception unit on the basis of the first wireless communication signal, a second wireless communication signal obtained by reflecting the first wireless communication signal by the reflection unit, and a positional relationship between the reception unit and the reflection unit.

The signal processing device may further include a plurality of the first transmission/reception units, in which
the calculation unit calculates position information on the object on the basis of a positional relationship between the first transmission/reception units and the first wireless communication signal and the second wireless communication signal received by the first transmission/reception units.

The signal processing device may further include a plurality of the first transmission/reception units, in which
the calculation unit calculates position information on the object on the basis of a time difference or a phase difference between the first wireless communication signal and the second wireless communication signal received by each of the first transmission/reception units, or both of them.

The reflection unit may be positionally changeable, and selectively reflects the signal, and
the calculation unit may change the position of the reflection unit on the basis of a comparison result between the signal received by the reception unit in a case where the reflection unit reflects the signal and the signal received by the reception unit in a case where the reflection unit does not reflect the signal.

The signal processing device may further include a plurality of the reflection units, in which
the calculation unit calculates the position information on the basis of the signal received by the reception unit and a positional relationship between the reception unit and each of the reflection units.

Each of the reflection units may selectively reflect the signal, and
the calculation unit may calculate position information on the object on the basis of a comparison result between a first signal received by the reception unit in a case where the reflection unit reflects the signal and a second signal received by the reception unit in a case where the reflection unit does not reflect the signal.

The reflection unit may include a meta-surface.

The reflection unit may contain at least one material selected from gold, silver, copper, and aluminum.

When the signal is a radar signal, the reflection unit may be a corner reflector.

When the signal is a wireless communication signal, the reflection unit may be planar.

The signal processing device may measure biological information of a human.

The signal processing device may measure at least one of a heart rate and a pulse of a human.

Furthermore, the present technology provides a measurement device including:
a transmission unit that transmits a signal toward an object;
a reception unit that receives a signal from the object;
a reflection unit that reflects the signal toward the object or the reception unit; and
a calculation unit that calculates position information on the object, in which
the calculation unit calculates the position information on the basis of the signal received by the reception unit and a positional relationship between the reception unit and the reflection unit.

Furthermore, the present technology provides a signal processing method including:
receiving a signal from an object;
reflecting the signal toward the object or a position where the signal has been received; and
calculating position information on the object on the basis of the received signal and a positional relationship between the position where the signal has been received and a position where the signal has been reflected.

According to the present technology, spatial resolution can be enhanced with a simple configuration. Note that effects described herein are not necessarily restrictive, and any of the effects described in the present disclosure may be exhibited.

### BRIEF DESCRIPTION OF DRAWINGS

Fig. 1 is a block diagram illustrating a configuration example of a signal processing device 100 according to an embodiment of the present technology.
Fig. 2A is a schematic diagram illustrating a configuration example of the signal processing device. Fig. 2B is a graph illustrating an example of a change in a signal processed by the signal processing device.
Fig. 3 is a schematic diagram related to a flow of processing of the signal processing device.
Fig. 4 is a block diagram illustrating a configuration example of a signal processing device 100 according to an embodiment of the present technology.
Fig. 5 is a schematic diagram for explaining operation of the signal processing device 100 according to an embodiment of the present technology.
Fig. 6 is a schematic diagram for explaining the operation of the signal processing device 100 according to an embodiment of the present technology.
Fig. 7 is a schematic diagram for explaining the operation of the signal processing device 100 according to an embodiment of the present technology.
Fig. 8 is a graph illustrating a processing result of the signal processing device 100 according to an embodiment of the present technology.
Fig. 9 is a schematic diagram for explaining the operation of the signal processing device 100 according to an embodiment of the present technology.
Fig. 10 is a graph illustrating a processing result of the signal processing device 100 according to an embodiment of the present technology.
Fig. 11 is a flowchart illustrating an example of a processing flow of the signal processing device 100 according to an embodiment of the present technology.
Fig. 12 is a schematic diagram for explaining the operation of the signal processing device 100 according to an embodiment of the present technology.
Fig. 13 is a schematic diagram for explaining the operation of the signal processing device 100 according to an embodiment of the present technology.
Fig. 14 is a graph illustrating a processing result of the signal processing device 100 according to an embodiment of the present technology.
Fig. 15 is a schematic diagram for explaining the operation of the signal processing device 100 according to an embodiment of the present technology.
Fig. 16 is a flowchart illustrating an example of a processing flow of the signal processing device 100 according to an embodiment of the present technology.
Fig. 17 is a graph illustrating a processing result of the signal processing device 100 according to an embodiment of the present technology.
Fig. 18 is a schematic diagram for explaining the operation of the signal processing device 100 according to an embodiment of the present technology.
Fig. 19 is a flowchart illustrating an example of a processing flow of the signal processing device 100 according to an embodiment of the present technology.
Fig. 20 is a flowchart illustrating an example of a processing flow of the signal processing device 100 according to an embodiment of the present technology.
Fig. 21 is a block diagram illustrating a configuration example of the signal processing device 100 according to the present embodiment.
Fig. 22 is a flowchart illustrating an example of a processing flow of the signal processing device 100 according to an embodiment of the present technology.
Fig. 23 is a schematic diagram for explaining the operation of the signal processing device 100 according to an embodiment of the present technology.
Fig. 24 is a schematic diagram for explaining the operation of the signal processing device 100 according to an embodiment of the present technology.
Fig. 25 is a schematic diagram for explaining the operation of the signal processing device 100 according to an embodiment of the present technology.
Fig. 26 is a graph illustrating a processing result of the signal processing device 100 according to an embodiment of the present technology.
Fig. 27 is a schematic diagram for explaining the operation of the signal processing device 100 according to an embodiment of the present technology.
Fig. 28 is a graph illustrating a processing result of the signal processing device 100 according to an embodiment of the present technology.
Fig. 29 is a graph illustrating a processing result of the signal processing device 100 according to an embodiment of the present technology.
Fig. 30 is a flowchart illustrating an example of a processing flow of the signal processing device 100 according to an embodiment of the present technology.
Fig. 31 is a block diagram illustrating a configuration example of a measurement device 1000 according to an embodiment of the present technology.
Fig. 32 is a schematic diagram illustrating an example of an arrangement position of the measurement device 1000 according to an embodiment of the present technology.
Fig. 33 is a schematic diagram illustrating an example of an arrangement position of the measurement device 1000 according to an embodiment of the present technology.
Fig. 34 is a flowchart illustrating an example of a signal processing method according to an embodiment of the present technology.

### MODE FOR CARRYING OUT THE INVENTION

Hereinafter, preferred embodiments for carrying out the present technology will be described with reference to the drawings. Note that the embodiments to be described below each illustrate an example of a representative embodiment of the present technology, and the scope of the present technology is not limited by this. Furthermore, in the present technology, any of the following examples and modifications thereof can be combined.

In the following description of the embodiments, a configuration may be described using terms with "substantially" such as substantially parallel or substantially orthogonal. For example, "substantially parallel" means not only being completely parallel, but also includes being substantially parallel, that is, a state shifted by, for example, about several percent from the completely parallel state. This similarly applies to other terms with "substantially". Furthermore, each drawing is a schematic diagram and is not necessarily strictly illustrated. A scale of the drawings is exaggerated to facilitate understanding of the technical features. Therefore, it should be noted that the scale of the drawings and a scale of an actual device are not necessarily the same.

Unless otherwise specified, in the drawings, "upper" means an upward direction or an upper side in the drawing, "lower" means a downward direction or a lower side in the drawing, "left" means a leftward direction or a left side in the drawing, and "right" means a rightward direction or a right side in the drawing. Furthermore, in the drawings, the same or equivalent elements or members are denoted by the same reference signs, and redundant description will be omitted.

The description will be given in the following order.
1. First Embodiment of Present Technology (Example of Signal Processing Device)
2. Second Embodiment of Present Technology (Example 1 of Signal Processing Device Using Radar Signal)
   (1) Signal Processing Device Using Radar Signal
   (2) Present Embodiment
      (2-1) Distance Resolution
      (2-2) Angle Resolution
      (2-3) Specific Example 1 of Calculation
      (2-4) Specific Example 2 of Calculation
3. Third Embodiment of Present Technology (Example 2 of Signal Processing Device Using Radar Signal)
4. Fourth Embodiment of Present Technology (Example 3 of Signal Processing Device Using Radar Signal)
5. Fifth Embodiment of Present Technology (Example 4 of Signal Processing Device Using Radar Signal)
6. Sixth embodiment of Present Technology (Example 5 of Signal Processing Device Using Radar Signal)
7. Seventh Embodiment of Present Technology (Example 1 of Signal Processing Device Using Wireless Communication Signal)
   (1) Signal Processing Device Using Wireless Communication Signal
   (2) Present Embodiment
8. Eighth Embodiment of Present Technology (Example 2 of Signal Processing Device Using Wireless Communication Signal)
9. Ninth Embodiment of Present Technology (Example 3 of Signal Processing Device Using Wireless Communication Signal)
10. Tenth Embodiment of Present Technology (Example 4 of Signal Processing Device Using Wireless Communication Signal)
11. Eleventh Embodiment of Present Technology (Example of Measurement Device)
12. Twelfth Embodiment of Present Technology (Example of Signal Processing Method)

### [1. First Embodiment of Present Technology (Example of Signal Processing Device)]

The present technology provides a signal processing device including: a reception unit that receives a signal from an object; a reflection unit that reflects the signal toward the object or the reception unit; and a calculation unit that calculates position information on the object, in which the calculation unit calculates the position information on the basis of the signal received by the reception unit and a positional relationship between the reception unit and the reflection unit.

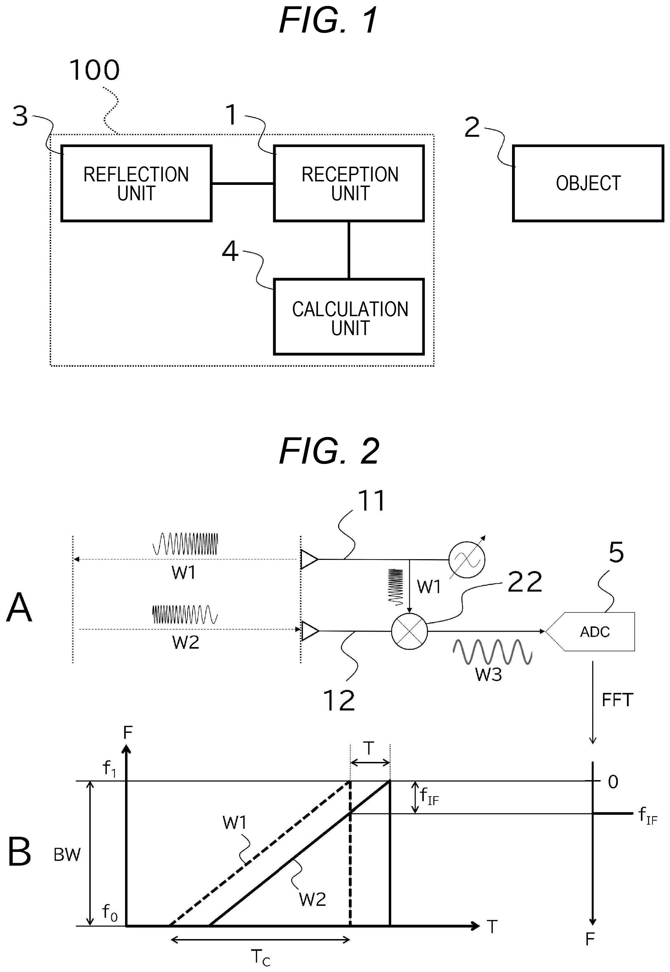

A configuration example of a signal processing device according to an embodiment of the present technology will be described with reference to Fig. 1. Fig. 1 is a block diagram illustrating a configuration example of a signal processing device 100 according to an embodiment of the present technology.

As illustrated in Fig. 1, the signal processing device 100 includes a reception unit 1, a reflection unit 3, and a calculation unit 4. The reflection unit 3 is arranged at a position farther from an object 2 than the reception unit 1.

The reception unit 1 receives a signal from the object 2. The reflection unit 3 reflects the signal from the object 2 toward the object 2 or the reception unit 1.

For example, when signals are transmitted from two positions in the object 2, the reflection unit 3 reflects the signals, so that a path length difference (a difference in arrival time of the signals) between the signals is further increased. This makes it easy to observe each of the two positions in the object 2. That is, the spatial resolution is improved.

The calculation unit 4 calculates the positional information on the object 2 on the basis of the signal received by the reception unit 1 and the positional relationship between the reception unit 1 and the reflection unit 3. The position information includes, for example, distance information from the reception unit 1 to the object 2, direction (angle) information in which the object 2 is arranged, and the like.

What is important here is that the positional relationship between the reception unit 1 and the reflection unit 3 is known. For example, Patent Document 1 (Japanese Patent Application Laid-Open No. 2018 -72171) describes in paragraph[0032] that a reflection plate on a wall surface reflects radio waves to generate a distance difference. However, in this configuration, the reflection plate is arranged in the environment, and the distance between the reflection plate and the reception antenna may vary. Therefore, there is room for improvement in spatial resolution.

According to the present technology, since the positional relationship between the reception unit 1 and the reflection unit 3 is known, the spatial resolution can be improved by performing calculation using the path length difference between the signal from the object 2 and the signal reflected by the reflection unit 3. Note that this effect similarly occurs in other embodiments described later. Therefore, in other embodiments, repeated description thereof may be omitted.

Note that, in the signal processing device 100 according to an embodiment of the present technology, the positional relationship between the reception unit 1 and the reflection unit 3 may be known, and the arrangement position of the reflection unit 3 is not limited. The reflection unit 3 may be built in the signal processing device 100 or may be arranged outside the signal processing device 100.

The above content described for the signal processing device according to the first embodiment of the present technology can be applied to other embodiments of the present technology as long as there is no technical contradiction.

### [2. Second Embodiment of Present Technology (Example 1 of Signal Processing Device Using Radar Signal)]

### [(1) Signal Processing Device Using Radar Signal]

The signal processing device according to the present technology can transmit and receive radar signals, for example. For example, the signal processing device can transmit and receive a radar signal in a millimeter wave band whose frequency changes with time.

Processing of the signal processing device that transmits and receives radar signals will be described with reference to Fig. 2. Fig. 2A is a schematic diagram illustrating a configuration example of the signal processing device.

As illustrated in Fig. 2A, a transmission antenna 11 transmits a first signal W1 that is a chirp signal to an object. A reception antenna 12 receives a second signal W2 that is a chirp signal reflected by a subject. The chirp signal is a signal in a millimeter wave band whose frequency changes with time. That is, each of the first signal and the second signal is a signal in a millimeter wave band whose frequency changes with time.

A mixer 22 combines the first signal and the second signal to generate an IF signal W3. The IF signal is AD-converted into a digital signal by an AD converter 5, and then converted into a frequency domain by fast Fourier transform (FFT).

An example of the first signal and the second signal change will be described with reference to Fig. 2B. Fig. 2B is a graph illustrating an example of a change in a signal processed by the signal processing device. In the left diagram of Fig. 2B, the horizontal axis represents time, and the vertical axis represents the frequency of the signal.

First, the first signal W1 to be transmitted to the object changes over time from the initial frequency f₀ toward the target frequency f₁. The time required to change from the frequency f₀ to the frequency f₁ is the chirp time T_{c}. A difference between the frequency f₀ and the frequency f₁ is a sweep bandwidth BW.

Next, the frequency of the second signal W2 reflected by the object also changes over time similarly to the first signal W1. A time from when the signal is transmitted from the millimeter wave radar device to when the signal is reflected by the object and returns to the signal processing device is a delay time T.

There is a correlation between a frequency f_{IF} of the IF signal W3 obtained by mixing the first signal W1 and the second signal W2 and the distance to the object. Specifically, the distance d from the signal processing device 100 to the object can be calculated on the basis of the following equation (1). Note that c represents the light speed.
[Math. 1] $d = \frac{{T}_{C} \times {f}_{IF}}{2 \times c \times BW}$

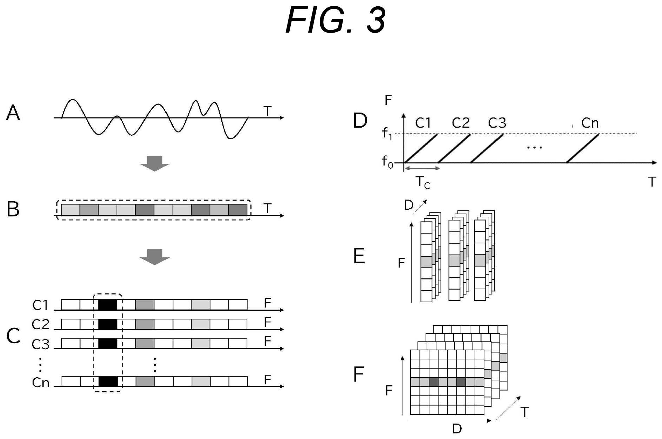

Next, a flow of processing of the signal processing device will be described with reference to Fig. 3. Fig. 3 is a schematic diagram related to a flow of processing of the signal processing device.

Fig. 3A illustrates an example of an IF signal that is an analog signal. In Fig. 3A, the horizontal axis represents time. By performing AD conversion on the analog signal, an IF signal that is a digital signal illustrated in Fig. 3B is obtained. For example, by analyzing the IF signal using a range fast Fourier transform (FFT) which is a frequency analysis algorithm, a frequency component having a horizontal axis as a frequency is obtained as illustrated in Fig. 3C.

Incidentally, a temporal change of the first signal transmitted to the object is illustrated in Fig. 3D. In the graph illustrated in Fig. 3D, the horizontal axis represents time and the vertical axis represents frequency. As illustrated in Fig. 3D, the first signal to be transmitted to the object changes over time from the initial frequency f₀ to the target frequency f₁, and then returns to the initial frequency f₀. Then, the first signal changes again over time from the initial frequency f₀ to the target frequency f₁. The frequency of the first signal repeatedly changes in this manner. Therefore, as illustrated in Fig. 3C, a frequency component corresponding to the unit change of the first signal is obtained.

In the frequency component illustrated in Fig. 3C, the darker the color, the higher the observation level. The second signal reflected by various objects in space is received, but a frequency component with a high observation level can be estimated to be a frequency component based on the signal reflected by the measuring object. As described above, since there is a correlation between the distance to the object and the frequency of the IF signal, the distance to the object can be estimated by extracting a frequency component having a high observation level.

Furthermore, it is preferable that the direction in which the object is arranged can be estimated in addition to the distance to the object. In order to achieve this, the reception unit 1 preferably includes a plurality of reception antennas that receives the second signal. As a result, as illustrated in Fig. 3E, the direction in which the object is arranged can be estimated on the basis of the phase difference between the plurality of second signals received at the same chirp time. In Fig. 3E, the vertical axis represents the frequency. Frequency components based on signals received by the reception antenna are arranged from the near side to the far side. In each unit change (C1 to C3), four types of frequency components based on the second signals received by the four reception antennas are illustrated. The direction in which the subject is present can be estimated on the basis of the four types of frequency components. Note that the number of reception antennas is not limited to four, and may be two or more.

The diagram illustrated in Fig. 3E can be transformed as in Fig. 3F. In Fig. 3F, the vertical axis represents the frequency, and the horizontal axis represents the direction. Frequency components corresponding to the chirp time are arranged from the near side to the far side. That is, the frequency component changes over time from the near side to the far side. In this way, since the distance and direction to the object can be estimated and a temporal change can also be observed, for example, movement of the body surface caused by expansion of the lung or the like can also be observed.

Note that the means for analyzing the IF signal is not limited thereto. For example, the distance to the object may be measured using a pulse compression technique. The pulse compression technique is a technique for measuring a distance with high resolution using a pulse signal having a short pulse width. A short pulse width can be obtained by cross-correlating the transmitted pulse signal and the received reflected signal. As a result, the distance can be measured with high accuracy.

Alternatively, the distance to the subject may be measured using a biological information analysis technology. The biological information analysis technology is a technology of analyzing a weak electromagnetic wave reflected by a biological tissue to observe a structure and a function of a body. By transmitting the electromagnetic wave to the living tissue and analyzing the reflected signal, the structure and function of the tissue can be observed.

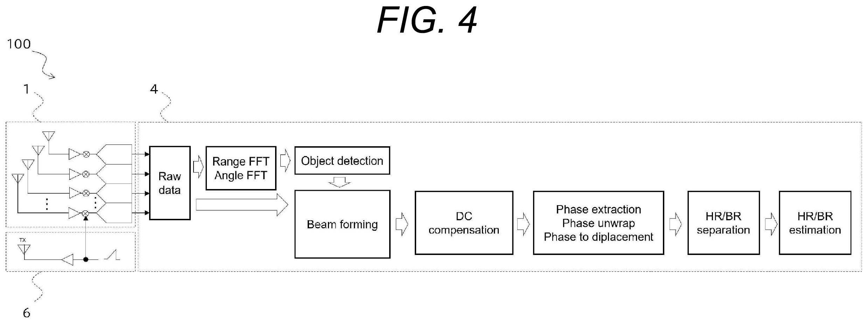

A specific processing flow of the calculation unit included in the signal processing device will be further described with reference to Fig. 4. Fig. 4 is a block diagram illustrating a configuration example of the signal processing device 100 according to an embodiment of the present technology. As illustrated in Fig. 4, the signal processing device 100 includes the reception unit 1 and the calculation unit 4. The signal processing device 100 may further include a transmission unit 6. Each of the reception unit 1 and the transmission unit 6 is preferably provided in the same device, but may be provided in a separate device.

After obtaining raw data from the reception unit 1, the calculation unit 4 analyzes the raw data using Range FFT and Angle FFT. FFT (Fast Fourier Transform) is processing of converting a signal into a frequency domain. The signal is a value that changes over time in the time domain, but can express the amplitude and phase of each frequency component in the frequency domain.

Next, the calculation unit 4 performs processing (Object detection) of detecting an object (Object) from the signal. This object is detected on the basis of, for example, signal intensity.

Next, the calculation unit 4 performs processing (Beam forming) of combining the signals from the plurality of reception units and emphasizing a signal from a specific direction. With this processing, a signal from a specific direction can be detected more accurately.

Next, the calculation unit 4 performs processing (DC compensation) of removing a DC component of the signal. The DC component is an average value of the signals, and may affect a frequency component of the signal. By performing this processing, the frequency component of the signal can be accurately analyzed.

Next, the calculation unit 4 performs processing of extracting a phase of a signal (Phase extraction). The phase may be obtained by arctangent demodulation of the complex number signal. By performing this processing, the minute displacement of the target can be analyzed.

Next, the calculation unit 4 performs phase unwrapping processing. By performing this processing, the phase change can be regarded as a continuous change.

Next, the calculation unit 4 performs processing of converting a phase to displacement (Phase to displacement processing). The displacement represents the position and movement of the object. By performing this processing, the position and movement of the object can be estimated from the phase of the signal.

Next, the calculation unit 4 performs processing (HR/BR separation) of separating the heart rate (HR) and the pulse (BR) by, for example, a bandpass filter or the like.

Finally, the calculation unit 4 performs processing (HR/BR estimation) of estimating the heart rate (HR) and the pulse (BR) rate from the obtained waveforms. By performing this processing, the heart rate and the respiratory rate can be grasped.

As described above, the signal processing device 100 according to an embodiment of the present technology can measure biological information of a human. In particular, the signal processing device 100 can measure at least one of a heart rate and a pulse of a human. Note that the biological information measured by the signal processing device 100 is not limited to the heart rate and the pulse, and the respiration rate and the like can also be measured.

### [(2) Present Embodiment]

### [(2-1) Distance Resolution]

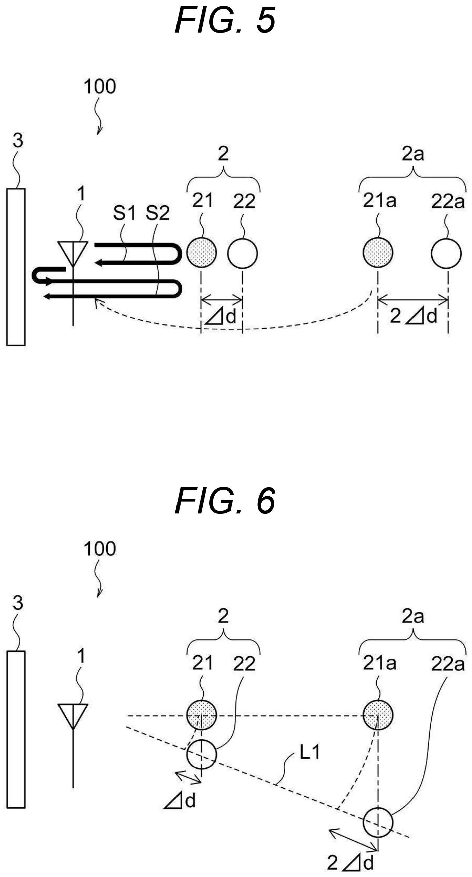

The operation of the signal processing device according to the present technology will be described with reference to Fig. 5. Fig. 5 is a schematic diagram for explaining the operation of the signal processing device 100 according to an embodiment of the present technology.

As illustrated in Fig. 5, the reflection unit 3, the reception unit 1, a first object 21, and a second object 22 are arranged on a straight line. A distance between the first object 21 and the second object 22 is Δd.

When the signal from the object is a radar signal, first, a first radar signal S1 transmitted from the transmission unit (not illustrated) to the object 2 (the first object 21 and the second object 22) and reflected by the first object 21 and the second object 22 is received by the reception unit 1. Therefore, a distance difference Δd occurs between the first radar signal S1 reflected by the first object 21 and the first radar signal S1 reflected by the second object 22.

Next, the reflection unit 3 reflects the first radar signal S1 toward the first object 21 and the second object 22. The first radar signal S1 is reflected by the first object 21 and the second object 22 to become a second radar signal S2.

At this time, since the radar signal reciprocates twice, the path length of the radar signal is doubled, and a distance difference 2Δd occurs between the second radar signal S2 reflected by the first object 21 and the second radar signal S2 reflected by the second object 22. That is, it can be defined that the first virtual object 21a and the second virtual object 22a are virtually arranged at positions twice as long as the distance from the reception unit 1 to the first object 21 and the second object 22. Then, the distance between the first virtual object 21a and the second virtual object 22a can be defined as 2Δd. Even if the first object 21 and the second object 22 cannot be separately detected when the distance difference is Δd, the first object 21 and the second object 22 can be separately detected when the distance difference becomes 2Δd.

The calculation unit (not illustrated) calculates position information on the object on the basis of the first radar signal S1, the second radar signal S2 obtained by reflecting the first radar signal S1 by the object 2, and the positional relationship between the reception unit 1 and the reflection unit 3. Since the distance difference between the first object 21 and the second object 22 is doubled, the distance resolution is improved, and the calculation unit 4 can separate the positions of the first object 21 and the second object 22. The radar signal may reciprocate three times or more, and the distance difference between the objects becomes longer as the number of reciprocations increases.

When the light speed is c and the bandwidths of the radar signals S1 and S2 are BW, the distance resolution dᵣₑₛ can be calculated using the following equation (1).${d}_{res} = c / 2 BW$

### [(2-2) Angle Resolution]

In Fig. 5, the reflection unit 3, the reception unit 1, the first object 21, and the second object 22 are arranged on a straight line. On the other hand, the first object 21 and the second object 22 may be arranged side by side in the left-right direction as viewed from the reception unit 1. This point will be described with reference to Fig. 6. Fig. 6 is a schematic diagram for explaining the operation of the signal processing device 100 according to an embodiment of the present technology.

As illustrated in Fig. 6, the first object 21 and the second object 22 are arranged side by side in the left-right direction as viewed from the reception unit 1. A first line segment L1 connecting the reception unit 1 and the second object 22 is defined. At this time, the distance between the reception unit 1 and the second object is longer by Δd than the distance between the reception unit 1 and the first object 21. When the radar signal reciprocates twice, this distance difference is doubled.

That is, it can be defined that the first virtual object 21a and the second virtual object 22a are virtually arranged at positions twice as long as the distance from the reception unit 1 to the first object 21 and the second object 22. Then, the distance difference can be defined as 2Δd. Since the distance difference becomes long, the calculation unit 4 can separately calculate the position information of each of the first object 21 and the second object 22 using the above equation (1).

### [(2-3) Specific Example 1 of Calculation]

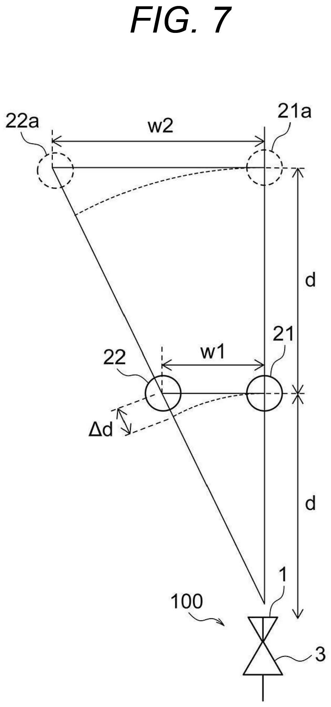

A specific example of the calculation will be described with reference to Fig. 7. Fig. 7 is a schematic diagram for explaining the operation of the signal processing device 100 according to an embodiment of the present technology.

As illustrated in Fig. 7, the first object 21 and the second object 22 are arranged side by side in the left-right direction as viewed from the reception unit 1. The reflection unit 3 is arranged at a position farther from the first object 21 and the second object 22 than the reception unit 1.

The distance resolution for separating and detecting the position information of each of the first object 21 and the second object 22 will be described. When the bandwidth BW of the radar signal is, for example, 4 [GHz] and the light speed c is 3×10⁸ [m/s], the distance resolution dᵣₑₛ is 3.75 [cm] when the calculation is performed using the above equation (1). That is, in a case where the distance difference between the two objects is within 3.75 [cm], the signal processing device 100 cannot detect the position information of each of the two objects.

A distance between the reception unit 1 and the first object 21 is defined as d. A distance between the first object 21 and the second object 22 is defined as w (w1). A distance difference Δd between the distance from the reception unit 1 to the second object 22 and the distance from the reception unit 1 to the first object 21 can be calculated using the following equation (2).
[Math. 2] $Δd = \sqrt{{w}^{2} + {d}^{2}} - d$

When the distance resolution dᵣₑₛ is 3.75 [cm], Δd needs to be larger than 3.75 [cm]. For example, when the distance d is 1 [m], it is found that w1 needs to be larger than 27.6 [cm] using the above equation (1). That is, when the distance w1 between the first object 21 and the second object 22 is 27.6 [cm] or less, the signal processing device cannot detect the position information of each of the two objects.

However, according to the present technology, since the radar signal reciprocates twice, when the distance d between the reception unit 1 and the first object 21 is 1 [m], the distance between the reception unit 1 and the first virtual object 21a is 2 [m]. When Δd is 3.75 [cm] and the distance d is 2 [m], it is found that w (w2) needs to be larger than 38.9 [cm] when the calculation is performed using the above equation (1). The distance w2 between the first virtual object 21a and the second virtual object 22a is twice the distance w1 between the first object 21 and the second object 22. Therefore, if the first object 21 and the second object 22 are arranged apart from each other by 19.45 [cm] obtained by halving 38.9 [cm], the position information of each of the first object 21 and the second object 22 can be calculated separately. In this way, the present technology improves spatial resolution.

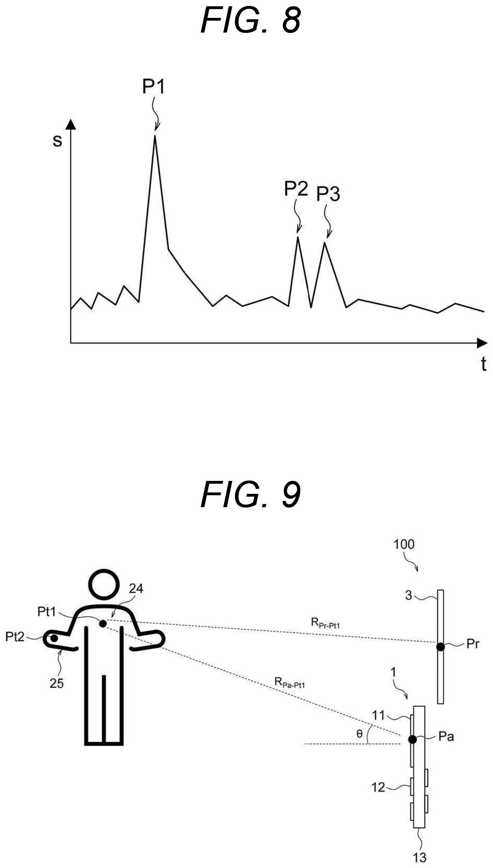

This will be further described with reference to Fig. 8. Fig. 8 is a graph illustrating a processing result of the signal processing device 100 according to an embodiment of the present technology. In Fig. 8, the horizontal axis represents the elapsed time t. The vertical axis represents the intensity s of the signal received by the reception unit 1.

First, at the point P1, a signal having one large intensity is detected. This point P2 indicates that signals reflected by the first object 21 and the second object 22 have been detected. At this time point, since the first object 21 and the second object 22 cannot be detected separately, a signal with one large intensity is displayed.

Next, the reflection unit 3 reflects the signal toward the first object 21 and the second object 22, and the first object 21 and the second object 22 reflect the signal toward the reception unit 1. Then, a signal is detected at each of the point P2 and the point P3. The position information of the first object 21 can be detected at the point P2, and the position information of the second object 22 can be detected at the point P3. Each of the first object 21 and the second object 22 can be detected separately.

Note that the configuration, shape, and the like of the reflection unit 3 are not particularly limited. In the schematic diagram illustrated in Fig. 5, the reflection unit 3 has a planar shape, but is not limited to this shape. The reflection unit 3 may have, for example, a corner reflector or a curved plate shape.

The material of the reflection unit 3 is not particularly limited as long as it can reflect a signal. The reflection unit 3 may be, for example, a metal plate, a copper-clad laminate, a meta-surface (metamaterial), or the like. Alternatively, a material that reflects a signal and transmits visible light may be used for the reflection unit 3. Although details will be described later, the reflection unit 3 can selectively reflect the signal by having the meta-surface. That is, the reflection unit 3 can have a reflection on/off function.

However, the material of the reflection unit 3 is preferably a material whose signal intensity is hardly attenuated by reflection. Therefore, it is preferable that the reflection unit 3 contains at least one material selected from gold, silver, copper, and aluminum. In particular, it is more preferable to contain aluminum in which the signal intensity is hardly attenuated and the manufacturing cost can be reduced.

Furthermore, when the signal is a radar signal, it is preferable that the reflection unit 3 is a corner reflector as illustrated in Fig. 7. The corner reflector has a structure in which three triangular metal plates are joined at right angles, and can reflect a signal in an incident direction. Since the corner reflector reflects the signal in the incident direction, position information and the like of the object can be measured with high accuracy. In addition, since the corner reflector has high reflectance, even a small object can obtain strong reflection. Furthermore, corner reflectors are simple in construction and inexpensive to manufacture.

### [(2-4) Specific Example 2 of Calculation]

A further specific example of the calculation will be described with reference to Fig. 9. Fig. 9 is a schematic diagram for explaining the operation of the signal processing device 100 according to an embodiment of the present technology. Fig. 9 illustrates the reception unit 1 and the reflection unit 3 included in the signal processing device 100. Specifically, the reception unit 1 is configured by arranging a reception antenna 11, an electronic component 12, and the like on a substrate 13. Furthermore, the reference point Pa of the reception antenna 11 and the reference point Pr of the reflection unit 3 are illustrated. It is assumed that the coordinates of the reference point Pa of the reception antenna 11 are (xₐ, yₐ, zₐ) and the coordinates of the reference point Pr of the reflection unit 3 are (xᵣ, yᵣ, zᵣ).

The signal processing device 100 separates and detects the position information of each of the chest 24 and the arm 25 of the human. It is assumed that the coordinate of the reference point Pt1 of the human chest 24 is (xₜ₁, yₜ₁, zₜ₁) and the coordinate of the reference point Pt2 is (xₜ₂, yₜ₂, zₜ₂). At this time, a distance R_{Pa-Pt1} between the reference point Pa of the reception antenna 11 and the reference point Pt1 of the human chest 24 can be calculated using the following equation (3).
[Math. 3] ${R}_{Pa - Pt 1} = \sqrt{{\left({x}_{a}-{x}_{t 1}\right)}^{2} + {\left({y}_{a}-{y}_{t 1}\right)}^{2} + {\left({z}_{a}-{z}_{t 1}\right)}^{2}}$

Further, the distance R_{Pr-Pt1} between the reference point Pr of the reflection unit 3 and the reference point Pt1 of the human chest 24 can be calculated using the following equation (4).
[Math. 4] ${R}_{Pr - Pt 1} = \sqrt{{\left({x}_{r}-{x}_{t 1}\right)}^{2} + {\left({y}_{r}-{y}_{t 1}\right)}^{2} + {\left({z}_{r}-{z}_{t 1}\right)}^{2}}$

A distance R'_{Pa-Pt1} between the reference point Pa of the reception antenna 11 and the reference point Pt1 of the human chest 24, which is observed by receiving the signal reflected by the reflection unit 3 and further reflected by the human chest 24, can be calculated using the following equation (5).$R {′}_{Pa - Pt 1} = {R}_{Pa - Pt 1} + {R}_{Pr - Pt 1}$

From the above, if the positional relationship (for example, distance, direction, and the like) between the reception unit 1 and the reflection unit 3 is known, the positional information on the object can be calculated on the basis of this positional relationship and the received signal.

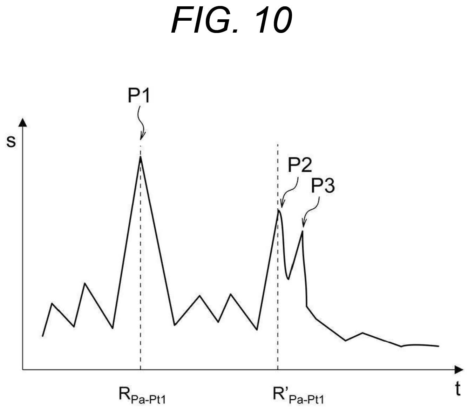

This will be further described with reference to Fig. 10. Fig. 10 is a graph illustrating a processing result of the signal processing device 100 according to an embodiment of the present technology. In Fig. 10, the horizontal axis represents the elapsed time t. The vertical axis represents the intensity s of the signal received by the reception unit 1.

As illustrated in Fig. 10, first, one large signal can be detected at the point P1. Since this signal is a signal detected in the vicinity of the distance R_{Pa-Pt1} between the reference point Pa of the reception antenna 11 and the reference point Pt1 of the human chest 24, it can be estimated that this signal is a signal from the chest 24 and the arm 25 of the human.

Next, signals can be detected at the point P2 and the point P3, respectively. The signal detected at the point P2 is a signal detected at a distance R'_{Pa-Pt1} between the reference point Pa of the reception antenna 11 and the reference point Pt1 of the human chest 24, the signal being observed by receiving the signal reflected by the reflection unit 3 and further reflected by the human chest 24. That is, the signal detected at the point P2 is a signal from the human chest 24, and the signal detected at the point P3 is a signal from the arm 25 of the human. The position information of each of the chest 24 and the arm 25 can be detected separately.

In this manner, the distance R_{Pa-Pt1} can be detected by reciprocating the first signal, and the position where the chest 24 is arranged can be focused. By detecting the distance R'_{Pa-Pt1} by the reciprocation of the second signal, the position where the chest 24 is arranged becomes clearer. That is, the spatial resolution is improved.

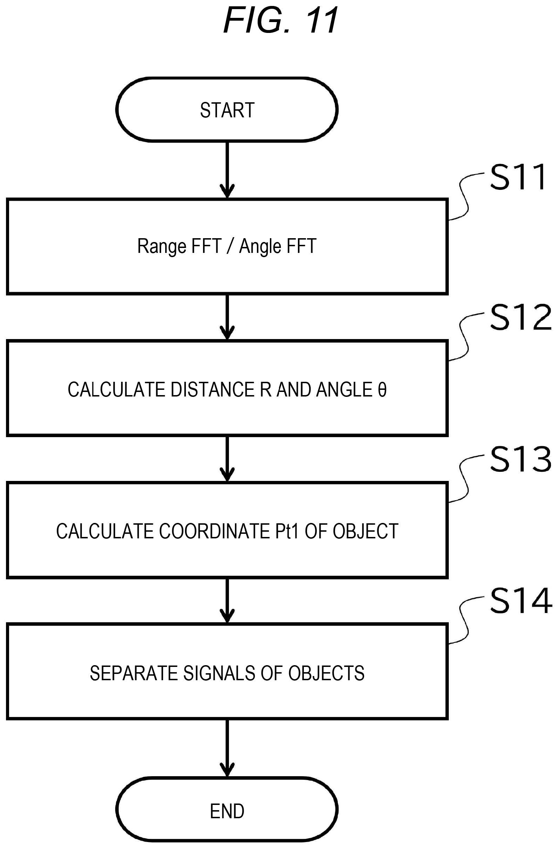

A signal processing flow by the calculation unit 4 will be described with reference to Fig. 11. Fig. 11 is a flowchart illustrating an example of a processing flow of the signal processing device 100 according to an embodiment of the present technology.

As illustrated in Fig. 11, first, in step S11, the received signal is divided by two-dimensional coordinates of a distance and an angle. For example, the analysis is performed using a range fast Fourier transform (FFT) and an angle FFT.

Next, in step S12, the distance R to the object and the angle θ at which the object is arranged are calculated based on the analyzed intensity and phase of the signal.

Next, in step S13, the coordinate Pt1 of the object is calculated based on the distance R and the angle θ.

Next, in step S14, the distance R' is calculated on the basis of the coordinate Pt1 of the object and the coordinate Pr of the reflection unit 3.

Finally, in step S15, signals of a plurality of objects are separated on the basis of peak values of signals received in a time zone near the distance R'. Since the distance R to the object is calculated in step S12, it is easy to separate the signals of the plurality of objects in step S14.

Note that the configuration of the antenna is not particularly limited. For example, a patch antenna that is a type of planar antenna can be used. The patch antenna is an antenna using a microstrip line. The frequency, gain, directivity, and the like can be changed by adjusting the shape and size of the patch. The patch antenna has advantages that the patch antenna is small, lightweight, mechanically stable, low manufacturing cost, and flat, so that it can be installed anywhere.

By connecting a plurality of the patch antennas in an array, gain and directivity can be enhanced, and beamforming can be performed. In particular, a multiple-input multiple-output (MIMO) array configuration can be employed. The MIMO array configuration is a technique for improving spatial resolution by arranging a plurality of antennas on a transmission side and a reception side and transmitting and receiving signals between the respective antennas.

The above content described for the signal processing device according to the second embodiment of the present technology can be applied to other embodiments of the present technology as long as there is no technical contradiction.

### [3. Third Embodiment of Present Technology (Example 2 of Signal Processing Device Using Radar Signal)]

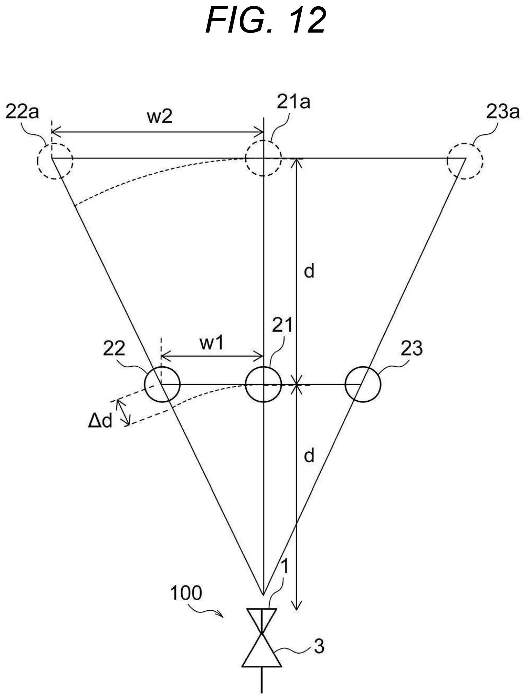

Another example will be described with reference to Fig. 12. Fig. 12 is a schematic diagram for explaining the operation of the signal processing device 100 according to an embodiment of the present technology.

As illustrated in Fig. 12, the first object 21, the second object 22, and the third object 23 are arranged side by side in the left-right direction as viewed from the signal processing device 100. Each of the second object 22 and the third object 23 is arranged symmetrically about the first object 21. Therefore, the distance between the reflection unit 3 and the second object 22 and the distance between the reflection unit 3 and the third object 23 are the same. As a result, even if the reflection unit 3 reflects the signal, a distance difference between the second virtual object 22a and a third virtual object 23a hardly occurs, and thus it is difficult to separate and detect each of the second virtual object 22a and the third virtual object 23a.

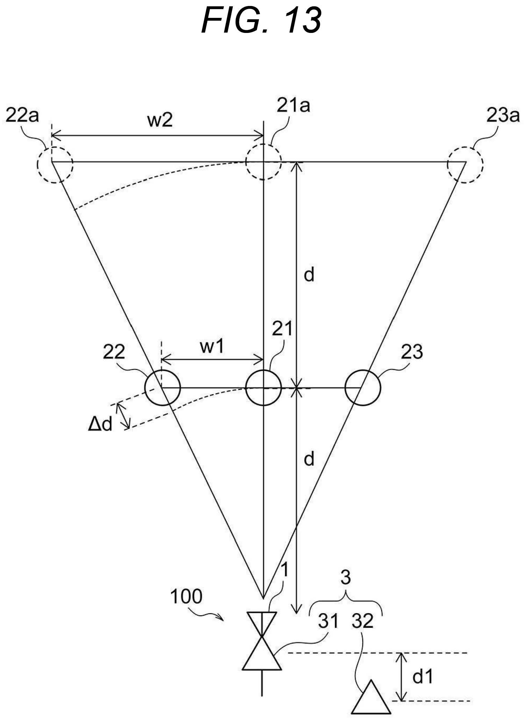

Therefore, the signal processing device 100 may include a plurality of reflection units. The calculation unit may calculate the position information on the basis of the signal received by the reception unit and the positional relationship between the reception unit and each reflection unit. This will be described with reference to Fig. 13. Fig. 13 is a schematic diagram for explaining the operation of the signal processing device 100 according to an embodiment of the present technology.

As illustrated in Fig. 13, the signal processing device 100 includes a plurality of reflection units. In this configuration example, the signal processing device 100 includes a first reflection unit 31 and a second reflection unit 32. The distance between the first reflection unit 31 and the second reflection unit 32 is d1.

The distance between the first reflection unit 31 and the second object 22 and the distance between the first reflection unit 31 and the third object 23 are the same. On the other hand, the distance between the second reflection unit 32 and the second object 22 is different from the distance between the second reflection unit 32 and the third object 23. Therefore, a distance difference between the second object 22 and the third object 23 occurs. Thus, the calculation unit 4 can calculate the position information on the basis of the signal received by reception unit 1 and the positional relationship between the reception unit 1 and the respective reflection units (the first reflection unit 31 and the second reflection unit 32).

For example, when the plurality of reflection units 3 is arranged in the left-right direction as viewed from the reception unit 1, paths of signals having different lengths are generated for an object in a horizontal angular direction other than the front direction. Therefore, a distance difference occurs in the path of each signal. As a result, the spatial resolution of the signal processing device 100 is improved.

In addition, when the plurality of reflection units 3 is arranged in the front-rear direction as viewed from the reception unit 1, paths of signals having different lengths are generated also for an object in the front direction. Therefore, a distance difference occurs in the path of each signal. As a result, the spatial resolution of the signal processing device 100 is improved.

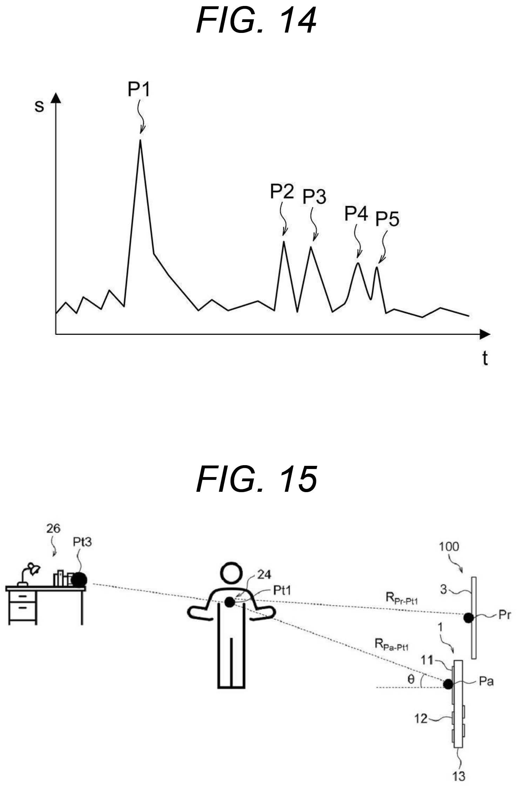

This will be further described with reference to Fig. 14. Fig. 14 is a graph illustrating a processing result of the signal processing device 100 according to an embodiment of the present technology. In Fig. 14, the horizontal axis represents elapsed time. The vertical axis indicates the intensity of the signal received by the reception unit 1.

First, at the point P1, a signal having one large intensity is detected. This point P1 indicates that signals reflected by the first object 21, the second object 22, and the third object 23 have been detected. At this time point, since the first object 21, the second object 22, and the third object 23 cannot be detected separately, a signal having one large intensity is displayed.

Next, the first reflection unit 31 and the second reflection unit 32 reflect the signal toward the first object 21, the second object 22, and the third object 23, and the first object 21, the second object 22, and the third object 23 reflect the signal toward the reception unit 1. Then, at the point P2, the position information of the first virtual object 21a having the shortest distance from the first reflection unit 31 can be detected. On the other hand, since the distance between the first reflection unit 31 and the second virtual object 22a and the distance between the first reflection unit 31 and the third virtual object 23a are the same, each of the second virtual object 22a and the third virtual object 23a cannot be separately detected at the point P3.

Subsequently, at the point P4, the position information of the first virtual object 21a and the third virtual object 23a is detected. In this example, the distance between the second reflection unit 32 and the first virtual object 21a is the same as the distance between the second reflection unit 32 and the third virtual object 23a. Therefore, at the point P4, the first virtual object 21a and the third virtual object 23a cannot be detected separately.

Finally, at the point P5, the position information of the second virtual object 22a having the longest distance from the second reflection unit 32 can be detected. In this way, by providing the plurality of reflection units, the spatial resolution is improved, and the position information of each object can be detected.

The above content described for the signal processing device according to the third embodiment of the present technology can be applied to other embodiments of the present technology as long as there is no technical contradiction.

### [4. Fourth Embodiment of Present Technology (Example 3 of Signal Processing Device Using Radar Signal)]

In the present technology, the reflection unit 3 reflects a signal to reciprocate the signal at least twice to an object. At this time, in a case where an unnecessary reflector is present at a position twice the distance from the signal processing device 100 to the object, it may be difficult to distinguish between a signal obtained by reciprocating the path from the signal processing device 100 to the object twice and a signal obtained by reciprocating the path from the signal processing device 100 to the unnecessary reflector once.

Therefore, it is preferable that the reflection unit 3 selectively reflects the signal. That is, the reflection unit 3 has a function of reflecting a signal and a function of transmitting a signal without reflecting the signal (function of turning on/off reflection), and it is preferable that reflection or transmission can be selected according to the situation.

This will be described with reference to Fig. 15. Fig. 15 is a schematic diagram for explaining the operation of the signal processing device 100 according to an embodiment of the present technology. As illustrated in Fig. 15, the reference point Pa of the reception antenna 11, the reference point Pr of the reflection unit 3, and the reference point Pt1 of the human chest 24 are illustrated. Furthermore, the reference point Pt3 of an unnecessary reflector is illustrated at a position twice as long as the distance from the reference point Pr of the reflection unit 3 to the reference point Pt1 of the human chest 24.

In this case, it may be difficult to distinguish between a signal obtained by reciprocating the path from the signal processing device 100 to the human chest 24 twice and a signal obtained by reciprocating the path from the signal processing device 100 to the unnecessary reflector 26 once.

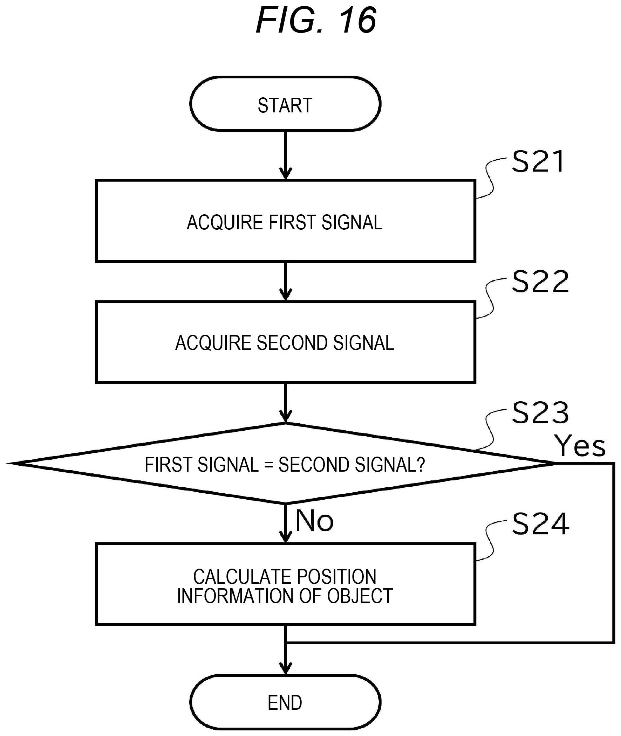

Therefore, it is preferable that the reflection unit 3 selectively reflects the signal. It is preferable that the calculation unit 4 calculates the position information on the object 2 on the basis of the comparison result between the first signal received by the reception unit 1 when the reflection unit 3 reflects the signal and the second signal received by the reception unit 1 in a case where the reflection unit 3 does not reflect the signal. This will be described with reference to Fig. 16. Fig. 16 is a flowchart illustrating an example of a processing flow of the signal processing device 100 according to an embodiment of the present technology.

As illustrated in Fig. 16, first, in step S21, the calculation unit 4 acquires the first signal received by the reception unit 1 in a case where the reflection unit 3 reflects the signal.

Next, in step S22, the calculation unit 4 acquires the second signal received by the reception unit 1 in a case where the reflection unit 3 does not reflect the signal.

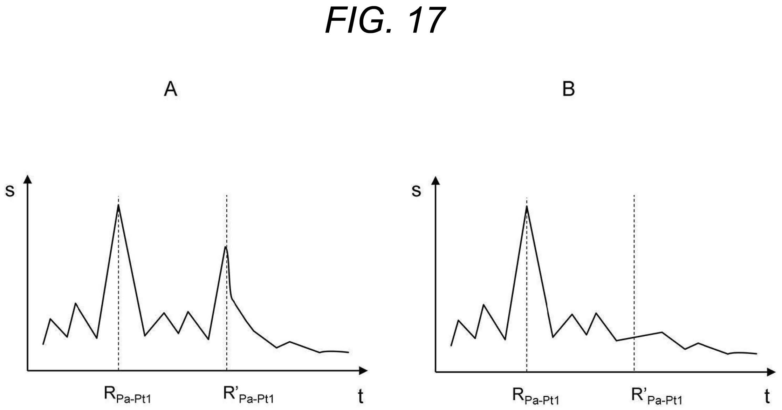

Next, in step S23, the calculation unit 4 compares the first signal with the second signal. This comparison will be described with reference to Fig. 17. Fig. 17 is a graph illustrating a processing result of the signal processing device 100 according to an embodiment of the present technology. In Fig. 17, the horizontal axis represents elapsed time. The vertical axis indicates the intensity of the signal received by the reception unit 1.

In Fig. 17A, the intensity of the signal increases at the time of the elapsed time R'_{Pa-P11}. On the other hand, in Fig. 17B, the intensity of the signal increases at the time of the elapsed time R'_{Pa-P11}.

When both the first signal received by the reception unit 1 in a case where the reflection unit 3 reflects a signal and the second signal received by the reception unit 1 in a case where the reflection unit 3 does not reflect a signal have the intensity illustrated in Fig. 17A, it can be estimated that the unnecessary reflector 26 is present. On the other hand, when the first signal has the intensity illustrated in Fig. 17A and the second signal has the intensity illustrated in Fig. 17B, it can be estimated that no unnecessary reflector 26 is present.

The description returns to Fig. 16. In step S23, when the intensities of the first signal and the second signal at the predetermined time are different from each other (step S23: No), since no unnecessary reflector 26 is present, in step S24, the calculation unit 4 can calculate the position information of the object 2 using the signal obtained by reciprocating twice.

When the intensities of the first signal and the second signal at the predetermined time are the same (step S23: Yes), since the unnecessary reflector 26 is present, the calculation unit 4 can calculate the position information of the object 2 using another method. The method will be described later.

In order to selectively reflect the signal, the reflection unit 3 may have a reconfigurable meta-surface (metamaterial). The reconfigurable meta-surface controls the reflection suppression and the reflection direction by controlling the resonance frequency of the resonance element using the switching function by the PIN diode and the variable capacitor. Since the signal processing device 100 includes the reconfigurable meta-surface, the function of the reflection unit 3 can be turned on/off (or the reflection direction can be changed). Accordingly, the presence or absence of the unnecessary reflector 26 can be detected.

The reconfigurable meta-surface is obtained by periodically arranging a minute structure including a substance such as metal or a dielectric. Since these microstructures are very small compared to the wavelength of the signal, the meta-surface is used to control the propagation of the signal.

The PIN diode is a diode capable of switching between a conduction state and an insulation state by applying a voltage. The variable capacitor is a capacitor whose capacitance can be changed by applying a voltage. By turning on the PIN diode, the resonance frequency of the resonance element can be set to a specific value, and the function of the reflection unit 3 can be turned on. By changing the variable capacitor, the reflection direction of the reflection unit 3 can be controlled.

The above content described for the signal processing device according to the fourth embodiment of the present technology can be applied to other embodiments of the present technology as long as there is no technical contradiction.

### [5. Fifth Embodiment of Present Technology (Example 4 of Signal Processing Device Using Radar Signal)]

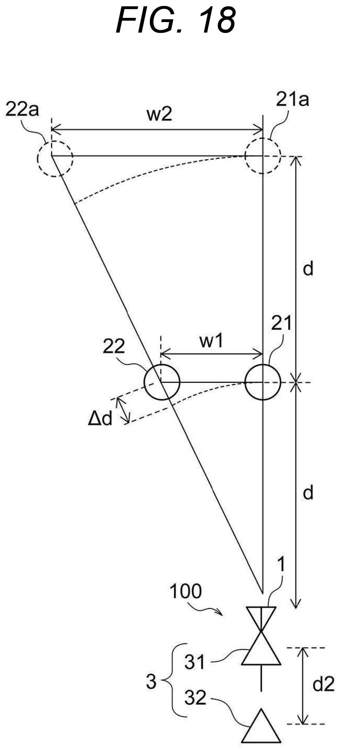

The position of the reflection unit 3 included in the signal processing device 100 according to an embodiment of the present technology may be changeable. This will be described with reference to Fig. 18. Fig. 18 is a schematic diagram for explaining the operation of the signal processing device 100 according to an embodiment of the present technology.

As illustrated in Fig. 18, the reflection unit 3 is positionally changeable. In this example, the position of the reflection unit 3 can be changed in the up-down direction in the drawing. For example, the reflection unit 31 moved downward by the distance d2 is a reflection unit 32. Note that the moving direction of the reflection unit 3 is not particularly limited, and the reflection unit 3 may move in, for example, the left-right direction or the oblique direction.

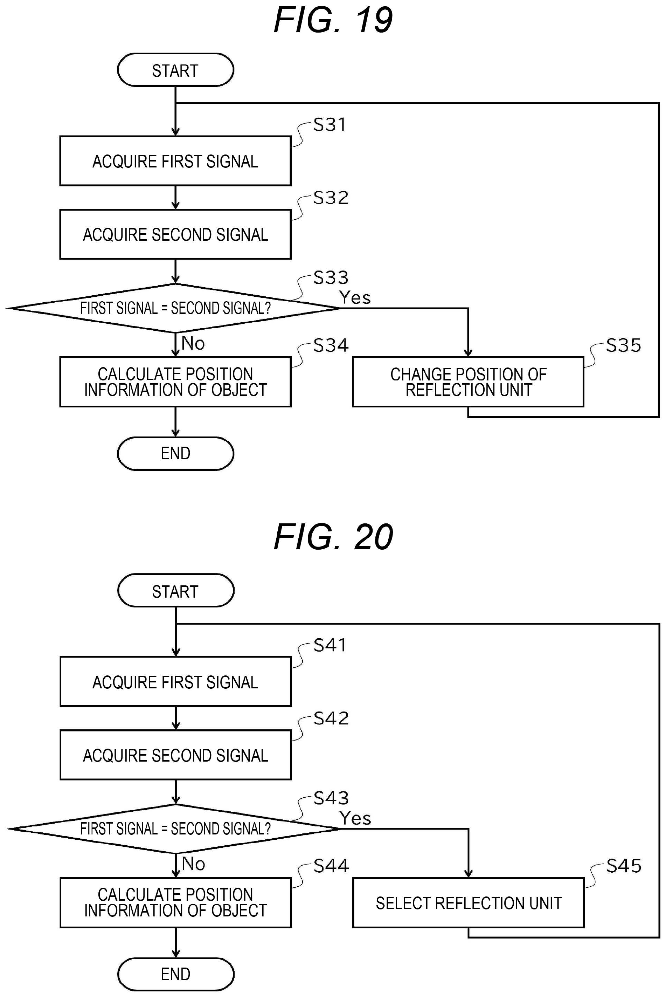

The reflection unit 3 can selectively reflect the signal. At this time, the calculation unit 4 may change the position of the reflection unit 3 on the basis of a comparison result between the first signal received by the reception unit 1 in a case where the reflection unit 3 reflects the signal and the second signal received by the reception unit 1 in a case where the reflection unit 3 does not reflect the signal. This will be described with reference to Fig. 19. Fig. 19 is a flowchart illustrating an example of a processing flow of the signal processing device 100 according to an embodiment of the present technology.

As illustrated in Fig. 19, first, in step S31, the calculation unit 4 acquires the first signal received by the reception unit 1 in a case where the reflection unit 3 reflects the signal.

Next, in step S32, the calculation unit 4 acquires the second signal received by the reception unit 1 in a case where the reflection unit 3 does not reflect the signal.

Next, in step S33, the calculation unit 4 compares the first signal with the second signal. When the intensities of the first signal and the second signal at the predetermined time are different from each other (step S33: No), it can be estimated that no unnecessary reflector 26 is present. At this time, in step S34, the calculation unit 4 can calculate the position information of the object 2 using the signal obtained by reciprocating twice.

When the intensities of the first signal and the second signal at the predetermined time are the same (step S33: Yes), it can be estimated that an unnecessary reflector 26 is present. Therefore, in step S35, the calculation unit 4 can change the position of the reflection unit 3. Then, the path length is different between a signal obtained by reciprocating the path from the signal processing device 100 to the object twice and a signal obtained by reciprocating the path from the signal processing device 100 to the unnecessary reflector once.

As a result, when the calculation unit acquires the first signal (step S31), acquires the second signal (step S32), and compares the first signal and the second signal (step S33), the intensities of the first signal and the second signal at the predetermined time may be different (step S33: No). In this case, in step S34, the calculation unit 4 can calculate the position information of the object 2 using the signal obtained by reciprocating twice. The loop of steps S31, S32, S33, and S35 can be repeated until the intensities of the first signal and the second signal are different.

The above content described for the signal processing device according to the fifth embodiment of the present technology can be applied to other embodiments of the present technology as long as there is no technical contradiction.

### [6. Sixth Embodiment of Present Technology (Example 5 of Signal Processing Device Using Radar Signal)]

The signal processing device 100 according to an embodiment of the present technology may include a plurality of reflection units 3, and each of the reflection units 3 may be selected as reflection or non-reflection. This will be described again with reference to Fig. 18.

The signal processing device 100 may include a plurality of reflection units 3. Each reflection unit 3 may selectively reflect the signal. For example, one reflection unit 32 of the two reflection units 3 in the drawing may reflect a signal, and the other reflection unit 31 may not reflect a signal.

At this time, the calculation unit 4 may select reflection or non-reflection of each of the reflection units 3 on the basis of a comparison result between the first signal received by the reception unit 1 in a case where the reflection unit 3 reflects the signal and the second signal received by the reception unit 1 in a case where the reflection unit 3 does not reflect the signal. This will be described with reference to Fig. 20. Fig. 20 is a flowchart illustrating an example of a processing flow of the signal processing device 100 according to an embodiment of the present technology.

As illustrated in Fig. 20, first, in step S41, the calculation unit 4 acquires the first signal received by the reception unit 1 in a case where the reflection unit 3 reflects the signal.

Next, in step S42, the calculation unit 4 acquires the second signal received by the reception unit 1 in a case where the reflection unit 3 does not reflect the signal.

Next, in step S43, the calculation unit 4 compares the first signal with the second signal. When the intensities of the first signal and the second signal at the predetermined time are different from each other (step S43: No), it can be estimated that no unnecessary reflector 26 is present. At this time, in step S44, the calculation unit 4 can calculate the position information of the object 2 using the signal obtained by reciprocating twice.

When the intensities of the first signal and the second signal at the predetermined time are the same (step S43: Yes), it can be estimated that the unnecessary reflector 26 is present. Therefore, in step S45, the calculation unit 4 can change the reflection unit 3 that reflects the signal. Then, the path length is different between a signal obtained by reciprocating the path from the signal processing device 100 to the object twice and a signal obtained by reciprocating the path from the signal processing device 100 to the unnecessary reflector once.

As a result, when the calculation unit acquires the first signal (step S41), acquires the second signal (step S42), and compares the first signal and the second signal (step S43), the intensities of the first signal and the second signal at the predetermined time may be different (step S43: No). In this case, in step S44, the calculation unit 4 can calculate the position information of the object 2 using the signal obtained by reciprocating twice. The loop of steps S41, S42, S43, and S45 can be repeated until the intensities of the first signal and the second signal are different.

The above content described for the signal processing device according to the sixth embodiment of the present technology can be applied to other embodiments of the present technology as long as there is no technical contradiction.

### [7. Seventh Embodiment of Present Technology (Example 1 of Signal Processing Device Using Wireless Communication Signal)]

### [(1) Signal Processing Device Using Wireless Communication Signal]

The signal processing device according to the present technology can transmit and receive a wireless communication signal, for example. The above content when the signal is a radar signal can also be applied when the signal is a wireless communication signal.

As an example of wireless communication, ultra-wide band (UWB) can be used. UWB is a communication technology using radio waves having a wide bandwidth. UWB can transmit a very short pulse signal on the order of nanoseconds by using a radio wave having a bandwidth of 100 MHz or more.

The distance measuring technology using UWB is a technology for measuring the distance to the object by measuring the propagation time of the short pulse signal. This technology is called a time of flight (ToF) method.

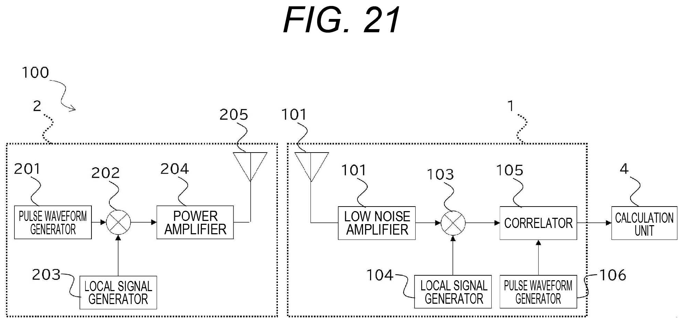

A configuration example of the signal processing device 100 when distance measurement is performed using UWB will be described with reference to Fig. 21. Fig. 21 is a block diagram illustrating a configuration example of the signal processing device 100 according to the present embodiment. As illustrated in Fig. 21, the signal processing device 100 includes a reception unit 1 that receives a signal from the object 2, and a calculation unit 4 that calculates position information on the object 2. When the signal is a wireless communication signal, the reception unit 1 is a first transmission/reception unit, and the object 2 is a second transmission/reception unit.

The first transmission/reception unit 1 includes a first antenna 101, a low noise amplifier 102, a down converter 103, a local signal generator 104, a correlator 105, and a pulse waveform generator 106. The second transmission/reception unit 2 includes a pulse waveform generator 201, an up-converter 202, a local signal generator 203, a power amplifier 204, and a second antenna 205.

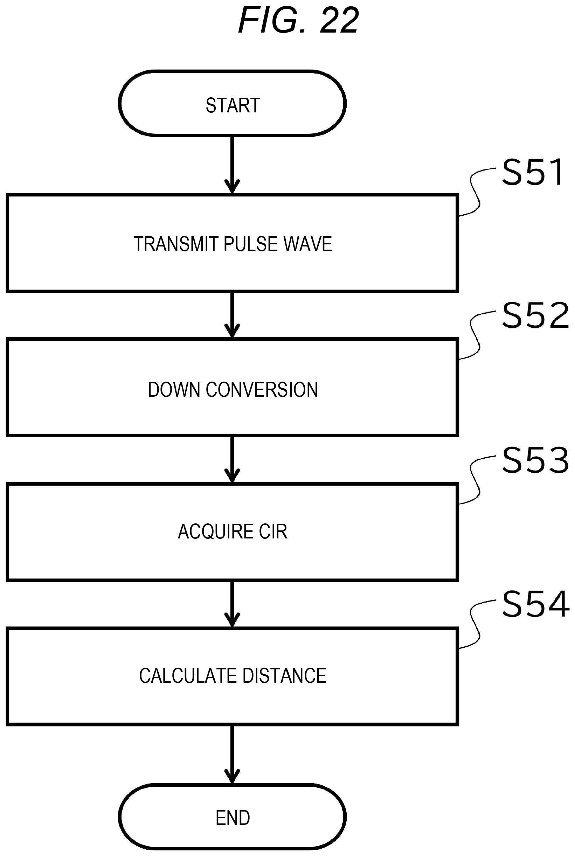

A processing flow of the signal processing device 100 will be described with reference to Fig. 22. Fig. 22 is a flowchart illustrating an example of a processing flow of the signal processing device 100 according to an embodiment of the present technology.

As illustrated in Fig. 22, first, in step S51, the second transmission/reception unit 2 transmits a short pulse wave on the order of nanoseconds. This pulse wave has a high time resolution on the time axis, and enables accurate distance measurement even in a multipath environment.

Next, in step S52, the first transmission/reception unit 1 receives the pulse wave transmitted from the first transmission/reception unit 1 and converts the pulse wave into a baseband signal (low frequency signal). Since the received signal is an RF signal (high frequency signal), it needs to be converted into a baseband signal. This processing is called down conversion.

Next, in step S53, the received signal and the pulse generated by the pulse generator are input to the correlator while shifting the timing. The correlator is a device that measures the similarity between two signals. Through this processing, a correlation value (CIR: Correlation Intensity Response) indicating the arrival time of the received signal can be obtained. The peak position of the CIR is proportional to the distance from the second transmission/reception unit 2 to the first transmission/reception unit 1.

Finally, in step S54, the arrival time is calculated from the peak position of the CIR and multiplied by the light speed to measure the distance to the object.

### [(2) Present Embodiment]

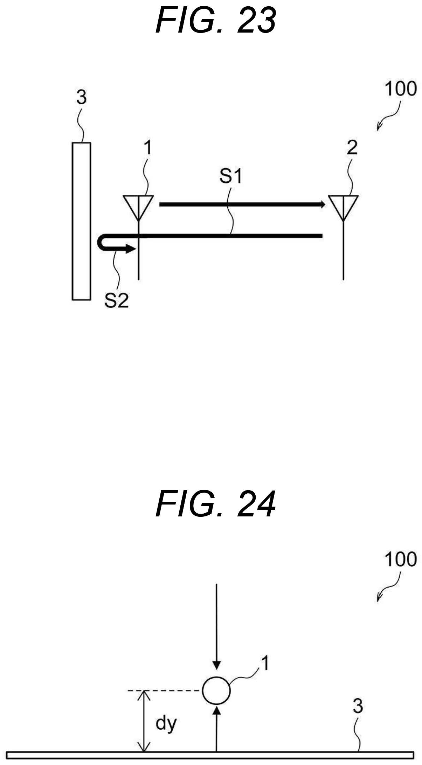

The operation of the signal processing device 100 according to the present embodiment will be described with reference to Fig. 23. Fig. 23 is a schematic diagram for explaining the operation of the signal processing device 100 according to an embodiment of the present technology.

As illustrated in Fig. 23, the signal processing device 100 includes a reception unit 1 that receives a signal from the object 2, a reflection unit 3 that reflects the signal toward the reception unit 1, and a calculation unit (not illustrated) that calculates position information on the object 2.

When the signal is a wireless communication signal, the reception unit 1 is a first transmission/reception unit, and the object 2 is a second transmission/reception unit.

The first transmission/reception unit 1 transmits a wireless communication signal to the second transmission/reception unit 2. The second transmission/reception unit 2 receives the wireless communication signal from the first transmission/reception unit 1 and transmits the first wireless communication signal S1 toward the first transmission/reception unit 1 and the reflection unit 3. The reflection unit 3 reflects the wireless communication signal from the second transmission/reception unit 2 toward the first transmission/reception unit 1.

A calculation unit (not illustrated) calculates position information on the second transmission/reception unit 2 on the basis of the first wireless communication signal, the second wireless communication signal S2 obtained by reflecting the first wireless communication signal S1 by the reflection unit 3, and a positional relationship between the reception unit (first transmission/reception unit) 1 and the reflection unit 3. The calculation unit 4 can calculate the distance between the first transmission/reception unit 1 and the second transmission/reception unit 2 by, for example, the ToF method.

Also in the present embodiment, since the positional relationship between the first transmission/reception unit 1 and the reflection unit 3 is known, the spatial resolution of the signal processing device 100 is improved. This will be described with reference to Fig. 24. Fig. 24 is a schematic diagram for explaining the operation of the signal processing device 100 according to an embodiment of the present technology.

As illustrated in Fig. 24, the first wireless communication signal from the second transmission/reception unit (not illustrated) is transmitted to the first transmission/reception unit 1 and the reflection unit 3. The first transmission/reception unit 1 receives the first wireless communication signal. The reflection unit 3 reflects the first wireless communication signal toward the first transmission/reception unit 1. The first transmission/reception unit 1 receives the reflected second wireless communication signal.

At this time, since the path length of the second wireless communication signal is longer than that of the first wireless communication signal, the second wireless communication signal is received later than the first wireless communication signal. The path difference d_{delay} between the first wireless communication signal and the second wireless communication signal can be calculated on the basis of the distance dy between the first transmission/reception unit 1 and the reflection unit 3 using the following equation (6).${d}_{delay} = 2 \times dy$

The path difference d_{delay} is a distance resolution that can be resolved at a minimum by the calculation unit. The calculation unit corrects the distance between the first transmission/reception unit 1 and the second transmission/reception unit 2 using the path difference d_{delay}. This improves the distance measurement accuracy. Note that the distance dy is a value that satisfies the following equation (7).
[Math. 5] $dy > \frac{c}{2 \times BW}$

It is preferable that when the signal is a wireless communication signal, the reflection unit 3 is planar. Unlike the corner reflector that reflects the radar signal in the incident direction, the reflection unit 3 that reflects the wireless communication signal may not reflect the wireless communication signal in the incident direction. Since the reflection unit 3 is planar, a signal can be reflected in a wide range, and the manufacturing cost is lower than that of the corner reflector.

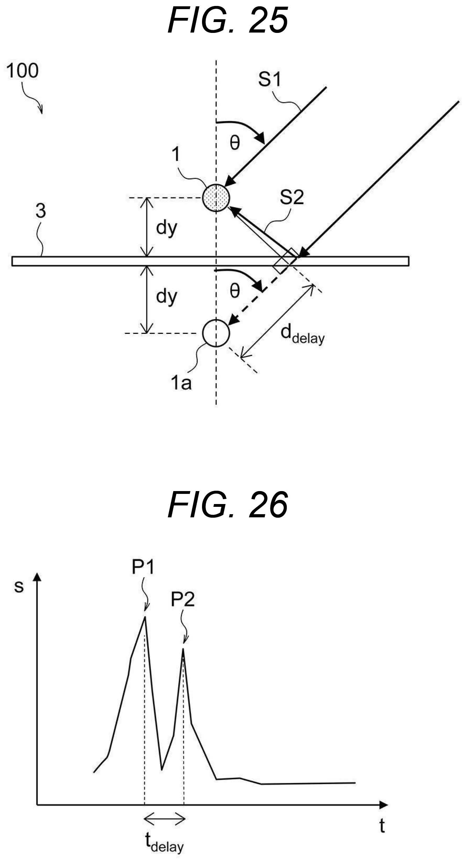

Fig. 24 illustrates an example in which the second transmission/reception unit (not illustrated), the first transmission/reception unit 1, and the reflection unit 3 are arranged on a straight line, and a wireless communication signal is transmitted from a direction perpendicular to a surface of the reflection unit 3. On the other hand, if the direction in which the second transmission/reception unit 2 is arranged is known, the calculation unit 4 can calculate the distance with high accuracy even when the wireless communication signal is transmitted from a direction oblique to the surface of the reflection unit 3. In this regard, Fig. 25 is a schematic diagram for explaining the operation of the signal processing device 100 according to an embodiment of the present technology.

As illustrated in Fig. 25, the first wireless communication signal is transmitted from a direction oblique to the surface of the reflection unit 3. Specifically, the first wireless communication signal is transmitted from the direction of the angle θ with reference to the direction perpendicular to the surface of the reflection unit 3. Since the distance between the first transmission/reception unit 1 and the reflection unit 3 is dy, the distance between the mirror image 1a of the first transmission/reception unit and the reflection unit 3 is also dy.

The first wireless communication signal S1 from the second transmission/reception unit (not illustrated) is transmitted to the first transmission/reception unit 1 and the reflection unit 3. The first transmission/reception unit 1 receives the first wireless communication signal S1. The reflection unit 3 reflects the first wireless communication signal S1 toward the first transmission/reception unit 1. The first transmission/reception unit 1 receives the reflected second wireless communication signal S2.

At this time, since the path length of the second wireless communication signal S2 is longer than that of the first wireless communication signal S1, the second wireless communication signal S2 is received later than the first wireless communication signal S1. The path difference d_{delay} between the first wireless communication signal S1 and the second wireless communication signal S2 can be calculated using the following equation (8) on the basis of the distance dy between the first transmission/reception unit 1 and the reflection unit 3 and the angle θ at which the second transmission/reception unit 2 is arranged.${d}_{delay} = 2 \times dy \times cosθ$

The path difference d_{delay} is a spatial resolution that can be resolved at a minimum by the calculation unit. The calculation unit corrects the distance between the first transmission/reception unit 1 and the second transmission/reception unit 2 using the path difference d_{delay}. This improves the distance measurement accuracy. Note that the distance d_{delay} is a value that satisfies the following equation (9). c is the light speed and BW is the bandwidth of the wireless communication signal.${d}_{delay} = c / BW$

The calculation of the calculation unit at this time will be described with reference to Fig. 26. Fig. 26 is a graph illustrating a processing result of the signal processing device 100 according to an embodiment of the present technology. In Fig. 26, the horizontal axis represents elapsed time. The vertical axis indicates the intensity of the signal received by the reception unit 1.

First, at the point P1, a signal having one large intensity is detected. The point P1 indicates that the first wireless communication signal S1 transmitted from the second wireless communication signal S2 is detected.

Next, at the point P2, a signal of one large intensity is detected. The point P2 indicates that the second wireless communication signal S2 reflected by the reflection unit 3 is detected.

The time difference t_{delay} between the time when the first wireless communication signal S1 is detected and the time when the second wireless communication signal S2 is detected can be calculated using the following equation (10).${t}_{delay} = 2 \times dy \times cosθ / c$

As described above, the path difference d_{delay} is a spatial resolution that can be resolved at the minimum by the calculation unit. Therefore, when the value of the time difference t_{delay} satisfies the following equation (11), the calculation unit can detect the first wireless communication signal S1 and the second wireless communication signal S2 separately.${t}_{delay} > 1 / BW$

Note that the present technology is not limited to UWB, and can also be applied to wireless communication technologies such as Bluetooth (registered trademark), Bluetooth (registered trademark) Low Energy, Wi-Fi, and millimeter waves.

As the distance measurement technique, for example, an impulse method (UWB: Ultra-Wide Band), a wide band frequency scan (Channel Sounder), frequency spread by a spreading code, OFDM(Orthogonal Frequency Division Multiplexing), and the like can be widely used without limitation.

The above content described for the signal processing device according to the seventh embodiment of the present technology can be applied to other embodiments of the present technology as long as there is no technical contradiction.

### [8. Eighth Embodiment of Present Technology (Example 2 of Signal Processing Device Using Wireless Communication Signal)]

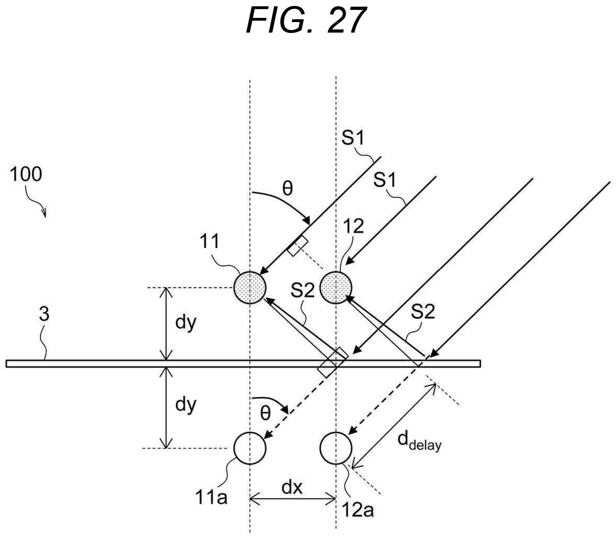

The seventh embodiment is an example of a case where the direction in which the second transmission/reception unit 2 is arranged is known. On the other hand, an example of a case where the direction in which the second transmission/reception unit 2 is arranged is unknown will be described with reference to Fig. 27. Fig. 27 is a schematic diagram for explaining the operation of the signal processing device 100 according to an embodiment of the present technology.

As illustrated in Fig. 27, the signal processing device 100 includes a plurality of first transmission/reception units 11 and 12. The distance between the first transmission/reception units 1 is dx.

The first wireless communication signal S1 is transmitted from a direction oblique to the surface of the reflection unit 3. Specifically, the first wireless communication signal S1 is transmitted from the direction of the angle θ with reference to the direction perpendicular to the surface of the reflection unit 3. The first wireless communication signal S1 is transmitted to the first transmission/reception unit 1 and the reflection unit 3. The first transmission/reception unit 1 receives the first wireless communication signal S1. The reflection unit 3 reflects the first wireless communication signal S1 toward the first transmission/reception unit 1. The first transmission/reception unit 1 receives the reflected second wireless communication signal S2.

The path difference d_{delay_ant} between the first wireless communication signal S1 and the second wireless communication signal S2 can be calculated on the basis of the distance dx between the respective first transmission/reception units 1 and the angle θ at which the second transmission/reception unit 2 is arranged using the following equation (12).${d}_{delay_ant} = dx \times sinθ$

At this time, a calculation unit (not illustrated) can calculate position information on an object (second transmission/reception unit) on the basis of a positional relationship (for example, a distance, an angle, or the like) between the first transmission/reception units 11 and 12 and the first wireless communication signals S1 and the second wireless communication signals S2 received by the first transmission/reception units. That is, the first wireless communication signals S1 and the second wireless communication signals S2 received by the first transmission/reception units 11 and 12 are used. As a result, the measurement accuracy of the angle θ at which the second transmission/reception unit 2 is arranged is improved.

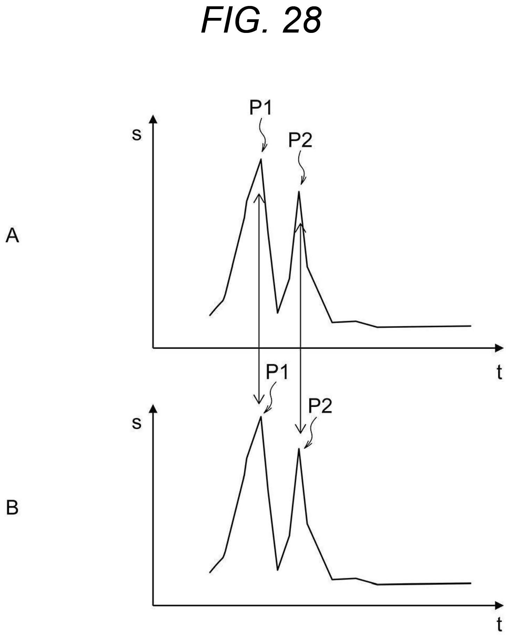

This will be described with reference to Fig. 28. Fig. 28 is a graph illustrating a processing result of the signal processing device 100 according to an embodiment of the present technology. In Fig. 28A, the horizontal axis represents elapsed time, and the vertical axis represents intensity of a signal received by the first transmission/reception unit 1. In Fig. 28B, the horizontal axis represents the elapsed time, and the vertical axis represents the intensity of the signal received by the first transmission/reception unit 1.

The point P1 indicates that the first wireless communication signal S1 transmitted from the second wireless communication signal S2 is detected. The point P1 indicates that the second wireless communication signal S2 reflected by the reflection unit 3 is detected.

At this time, the calculation unit 4 can calculate position information on the object (second transmission/reception unit) based on the first wireless communication signal S1 and the second wireless communication signal S2 received by the respective first transmission/reception units 11 and 12. That is, the calculation unit 4 compares the phases of the first wireless communication signals S1 at the point P1 with each other, and compares the phases of the second wireless communication signals S2 at the point P2 with each other, thereby being capable of calculating the position information on the object (second transmission/reception unit) with high accuracy.

The present embodiment is not limited to a signal processing device that transmits and receives a wireless communication signal, and may be, for example, a signal processing device that transmits and receives a radar signal. That is, the signal processing device that transmits and receives the radar signal may include a plurality of reception units. The positional relationship between the reception units is known. For example, as illustrated in Fig. 27, it is assumed that the distance between the reception units is dx.

At this time, the calculation unit can calculate the position information on the object on the basis of the positional relationship between the reception units and the first radar signal and the second radar signal received by the reception units. By using the above equation (12) and the like, the calculation unit can calculate the position information on the object with high accuracy.

The above content described for the signal processing device according to the eighth embodiment of the present technology can be applied to other embodiments of the present technology as long as there is no technical contradiction.

### [9. Ninth Embodiment of Present Technology (Example 3 of Signal Processing Device Using Wireless Communication Signal)]

Another example of the signal processing device including the plurality of first transmission/reception units will be described again with reference to Fig. 27. The path difference d_{delay} between the first wireless communication signal S1 and the second wireless communication signal S2 can be calculated on the basis of the distance dy between the first transmission/reception unit 1 and the reflection unit 3 and the angle θ at which the second transmission/reception unit 2 is arranged using the following equation (13).${d}_{delay} = 2 \times dy \times cosθ$

When the light speed is c and the frequency of the wireless communication signal is f, the wavelength λ of the wireless communication signal can be calculated using the following equation (14).$λ = c / f$

The phase difference ΔΦ between the first wireless communication signal S1 and the second wireless communication signal S2 can be calculated using the following equation (15).$ΔΦ = {d}_{delay} / λ$

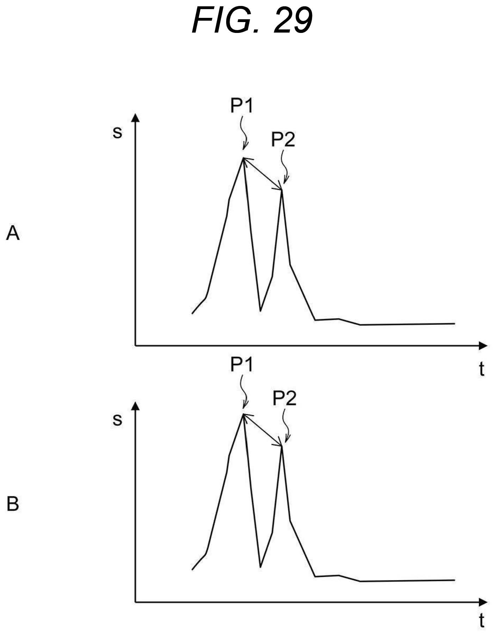

At this time, the calculation unit may calculate the position information on the object (second transmission/reception unit) on the basis of the phase difference ΔΦ between the first wireless communication signal and the second wireless communication signal received by each of the first transmission/reception units 11 and 12. This will be described with reference to Fig. 29. Fig. 29 is a graph illustrating a processing result of the signal processing device 100 according to an embodiment of the present technology. In Fig. 29A, the horizontal axis represents elapsed time, and the vertical axis represents intensity of a signal received by the first transmission/reception unit 1. In Fig. 29B, the horizontal axis represents the elapsed time, and the vertical axis represents the intensity of the signal received by the first transmission/reception unit 1.

As illustrated in Fig. 29, the calculation unit may calculate the position information on the object (second transmission/reception unit) on the basis of the phase difference between the first wireless communication signal and the second wireless communication signal received by each of the first transmission/reception units 11 and 12. Instead of the phase difference, a time difference between a time when the first wireless communication signal is received and a time when the second wireless communication signal is received may be used. Alternatively, both the phase difference and the time difference may be used.

By decreasing the phase interval with respect to the frequency of the wireless communication signal, the time interval within the wavelength can be decreased, so that angle measurement with higher accuracy can be performed.

The above content described for the signal processing device according to the ninth embodiment of the present technology can be applied to other embodiments of the present technology as long as there is no technical contradiction.

### [10. Tenth Embodiment of Present Technology (Example 4 of Signal Processing Device Using Wireless Communication Signal)]

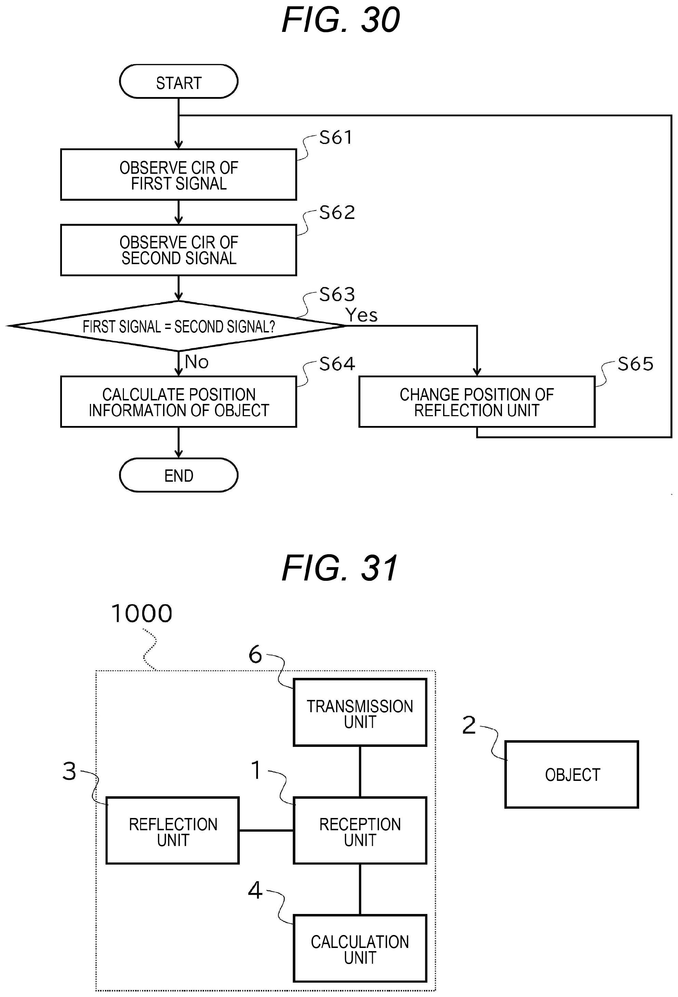

The above-described reflection unit that selectively reflects a signal can also be included in a signal processing device that receives a wireless communication signal. By turning on/off the reflection function of the reflection unit, the calculation unit can distinguish the wireless communication signal reflected by the reflection unit from the wireless communication signal from the unnecessary reflector. This will be described with reference to Fig. 30. Fig. 30 is a flowchart illustrating an example of a processing flow of the signal processing device 100 according to an embodiment of the present technology.

As illustrated in Fig. 30, first, in step S61, the calculation unit 4 observes a propagation characteristic (channel impulse response (CIR)) of the first signal received by the first transmission/reception unit 1 in a case where the reflection unit 3 reflects the signal.

Next, in step S62, the calculation unit 4 observes the propagation characteristic (CIR) of the second signal received by the first transmission/reception unit 1 in a case where the reflection unit 3 does not reflect the signal.

Next, in step S63, the calculation unit 4 compares the first signal with the second signal. At this time, the calculation unit is only required to compare the first wireless communication signal S1 and the second wireless communication signal S2 within the range of the path difference d_{delay}.

Next, in step S63, when the intensities of the first signal and the second signal at the predetermined time are different from each other (step S63: No), it can be estimated that no unnecessary reflector 26 is present. At this time, in step S64, the calculation unit 4 can calculate the position information of the second transmission/reception unit 2 using the wireless communication signal reflected by the reflection unit.

When the intensities of the first signal and the second signal at the predetermined time are the same (step S63: Yes), it can be estimated that the unnecessary reflector 26 is present. Therefore, the calculation unit 4 can calculate the position information of the object 2 using another method. As described above, for example, in step S65, the calculation unit may change the position of the reflection unit.

In order to selectively reflect the signal, the reflection unit 3 may have a reconfigurable meta-surface. The reconfigurable meta-surface controls the reflection suppression and the reflection direction by controlling the resonance frequency of the resonance element using the switching function by the PIN diode and the variable capacitor. Since the signal processing device 100 includes the reconfigurable meta-surface, the function of the reflection unit 3 can be turned on/off (or the reflection direction can be changed). Accordingly, the presence or absence of the unnecessary reflector 26 can be detected.

The above content described for the signal processing device according to the tenth embodiment of the present technology can be applied to other embodiments of the present technology as long as there is no technical contradiction.

### [11. Eleventh Embodiment of Present Technology (Example of Measurement Device)]

The present technology provides a measurement device including: a transmission unit that transmits a signal toward an object; a reception unit that receives a signal from the object; a reflection unit that reflects the signal toward the object or the reception unit; and a calculation unit that calculates position information on the object, in which the calculation unit calculates the position information on the basis of the signal received by the reception unit and a positional relationship between the reception unit and the reflection unit.

A measurement device according to an embodiment of the present technology will be described with reference to Fig. 31. Fig. 31 is a block diagram illustrating a configuration example of a measurement device 1000 according to an embodiment of the present technology. As illustrated in Fig. 31, the measurement device 1000 includes a transmission unit 6, a reception unit 1, a reflection unit 3, and a calculation unit 4. Each of the reception unit 1 and the transmission unit 6 is preferably provided in the same device, but may be provided in a separate device.

The transmission unit 6 transmits a signal toward the object 2. The reception unit 1 receives a signal from the object 2. The reflection unit 3 reflects a signal toward the object 2 or the reception unit 1. The calculation unit 4 calculates the positional information on the object 2 on the basis of the signal received by the reception unit 1 and the positional relationship between the reception unit 1 and the reflection unit 3.

The technologies described in the other embodiments described above can be applied to the transmission unit 6, the reception unit 1, the reflection unit 3, and the calculation unit 4.

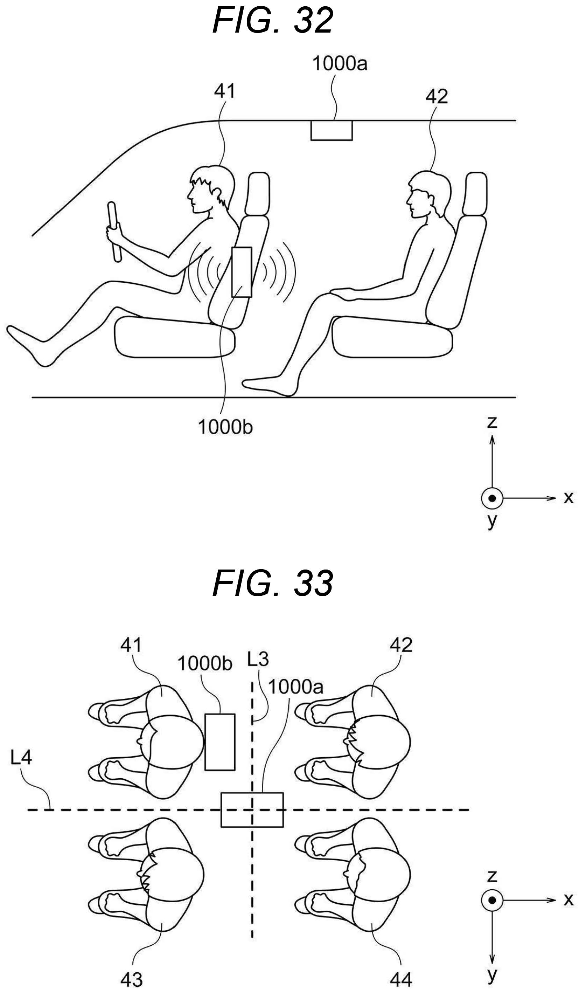

An example of the arrangement position of the measurement device 1000 will be described with reference to Figs. 32 and 33. Figs. 32 and 33 are schematic diagrams illustrating an example of an arrangement position of the measurement device 1000 according to an embodiment of the present technology. Fig. 32 is a side view of the inside of an automobile. Fig. 33 is a top view of the inside of an automobile.

As illustrated in Figs. 32 and 33, measurement devices 1000a and 1000b can be arranged in an automobile. The first measurement device 1000a is arranged on the ceiling in the vehicle. The second measurement device 1000b is arranged near a seat of a driver 41.

In Fig. 32, each of the first measurement device 1000a and the second measurement device 1000b can accurately detect the position of the heart of the driver. Therefore, each of the first measurement device 1000a and the second measurement device 1000b can accurately detect the heart rate or the like of the driver.

The heart rate is an index indicating a state such as stress, fatigue, and drowsiness. A sudden change in heart rate during driving may lead to an accident. By monitoring the driver's heart rate, driver's stress, fatigue, drowsiness, and the like can be found early, and the risk of an accident can be reduced.

An example of arrangement positions of the measurement devices 1000a and 1000b will be described with reference to Fig. 33. A first virtual line L3 passing through substantially the center of a driver 41 and a first fellow passenger 42 and a second virtual line L4 passing through substantially the center of the driver 41 and a second fellow passenger 43 are illustrated. The first measurement device 1000a arranged on the ceiling in the vehicle is arranged near the center of the vehicle.

When the first measurement device 1000a detects the driver 41 and the first fellow passenger 42 separately, it is preferable that the reflection unit (not illustrated) is not arranged on the first virtual line L3. Since the reflection unit is arranged closer to the driver 41 side or the first fellow passenger 42 side than the first virtual line L3, a distance difference occurs between the paths of the respective signals. As a result, the spatial resolution of the first measurement device 1000a is improved.

Note that this similarly applies to the case where the first measurement device 1000a detects the second fellow passenger 43 and the third fellow passenger 44 separately.

When the first measurement device 1000a detects the driver 41 and the second fellow passenger 43 separately, it is preferable that a reflection unit (not illustrated) is not arranged on the second virtual line L4. Since the reflection unit is arranged closer to the driver 41 side or the second fellow passenger 43 side than the second virtual line L4, a distance difference occurs in the path of each signal. As a result, the spatial resolution of the first measurement device 1000a is improved.

Note that this similarly applies to the case where the first measurement device 1000a detects the first fellow passenger 42 and the third fellow passenger 44 separately.

Further, when the driver 41, the first fellow passenger 42, the second fellow passenger 43, and the third fellow passenger 44 are separately detected, it is preferable that the reflection units are not arranged on the first virtual line L3 and the second virtual line L4. That is, it is preferable that distances from the driver 41, the first fellow passenger 42, the second fellow passenger 43, and the third fellow passenger 44 to the reflection units are different from each other.

The arrangement position of the measurement device 1000 is not limited to this example. Although not illustrated, the measurement device 1000 may be arranged, for example, near a windshield in the vehicle. Note that, also in this case, it is preferable that the reflection units are arranged such that a distance difference occurs in a path of a signal to each detection object.

The above content described for the measurement device according to the eleventh embodiment of the present technology can be applied to another embodiment of the present technology as long as there is no technical contradiction.

### [12. Twelfth Embodiment of Present Technology (Example of Signal Processing Method)]

The present technology provides a signal processing method including: receiving a signal from an object; reflecting the signal toward the object or a position where the signal has been received; and calculating position information on the object on the basis of the received signal and a positional relationship between the position where the signal has been received and a position where the signal has been reflected.

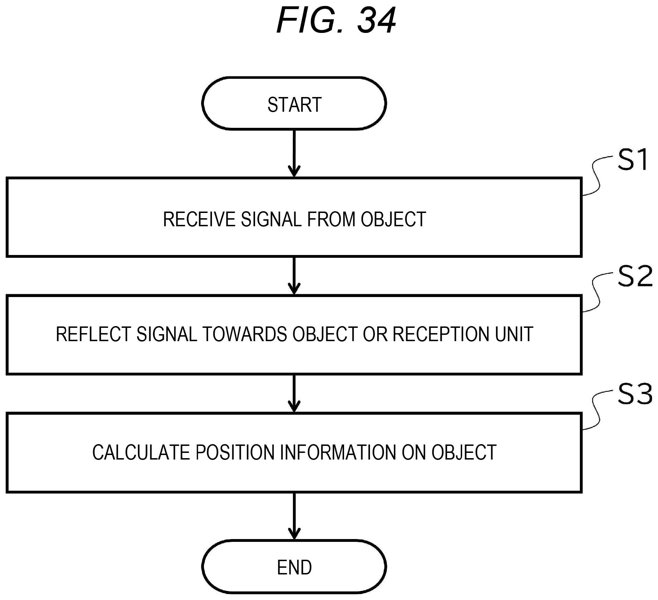

A signal processing method according to an embodiment of the present technology will be described with reference to Fig. 34. Fig. 34 is a flowchart illustrating an example of a signal processing method according to an embodiment of the present technology.

In order to realize the signal processing method according to the present embodiment, for example, the above-described signal processing device or the like can be used. First, in step S1, the reception unit included in the signal processing device receives a signal from an object.

Next, in step S2, the reflection unit included in the signal processing device reflects the signal toward the object or the reception unit (a position at which the signal is received). The angle of the reflection unit and the like are designed so that the signal can be reflected toward the object or the reception unit.

Next, in step S3, the calculation unit included in the signal processing device calculates position information on the object on the basis of the signal received by the reception unit and a positional relationship between the reception unit (a position at which the signal is received) and the reflection unit (a position at which the signal is reflected).

The above content described for the signal processing device according to the twelfth embodiment of the present technology can be applied to other embodiments of the present technology as long as there is no technical contradiction.

Note that embodiments according to the present technology are not limited to the respective embodiments described above, and various modifications can be made without departing from the gist of the present technology. The specific numerical values, shapes, materials (including compositions), and the like described in the respective embodiments are merely examples, and are not limited thereto.

Furthermore, the present technology may also adopt the following configurations.
[1] A signal processing device including:
   a reception unit that receives a signal from an object;
   a reflection unit that reflects the signal toward the object or the reception unit; and
   a calculation unit that calculates position information on the object, in which
   the calculation unit calculates the position information on the basis of the signal received by the reception unit and a positional relationship between the reception unit and the reflection unit.
[2] The signal processing device according to [1], in which
   the reflection unit selectively reflects the signal.
[3] The signal processing device according to [2], in which
   the calculation unit selects reflection or non-reflection of the reflection unit on the basis of a comparison result between the signal received by the reception unit in a case where the reflection unit reflects the signal and the signal received by the reception unit in a case where the reflection unit does not reflect the signal.
[4] The signal processing device according to any one of [1] to [3], in which
   the reflection unit is arranged at a position farther than the reception unit with respect to the object.
[5] The signal processing device according to any one of [1] to [4], in which
   when the signal is a radar signal,
   the reception unit receives a first radar signal transmitted from a transmission unit to an object and reflected by the object,
   the reflection unit reflects the first radar signal toward the object, and
   the calculation unit calculates position information on the object on the basis of the first radar signal, a second radar signal obtained by reflecting the first radar signal by the object, and a positional relationship between the reception unit and the reflection unit.
[6] The signal processing device according to [5], further including
   a plurality of the reception units, in which
   the calculation unit calculates position information on the object on the basis of a positional relationship between the reception units and the first radar signal and the second radar signal received by the reception units.
[7] The signal processing device according to any one of [1] to [6], in which
   when the signal is a wireless communication signal, the reception unit is a first transmission/reception unit, and the object is a second transmission/reception unit,
   the first transmission/reception unit transmits the wireless communication signal toward the second transmission/reception unit,
   the second transmission/reception unit receives the wireless communication signal from the first transmission/reception unit and transmits a first wireless communication signal toward the first transmission/reception unit and the reflection unit,
   the reflection unit reflects the wireless communication signal from the second transmission/reception unit toward the first transmission/reception unit, and
   the calculation unit calculates position information on the second transmission/reception unit on the basis of the first wireless communication signal, a second wireless communication signal obtained by reflecting the first wireless communication signal by the reflection unit, and a positional relationship between the reception unit and the reflection unit.
[8] The signal processing device according to [7], further including
   a plurality of the first transmission/reception units, in which
   the calculation unit calculates position information on the object on the basis of a positional relationship between the first transmission/reception units and the first wireless communication signal and the second wireless communication signal received by the first transmission/reception units.
[9] The signal processing device according to [7] or [8], further including
   a plurality of the first transmission/reception units, in which
   the calculation unit calculates position information on the object on the basis of a time difference or a phase difference between the first wireless communication signal and the second wireless communication signal received by each of the first transmission/reception units, or both of them.
[10] The signal processing device according to any one of [1] to [9], in which
   the reflection unit is positionally changeable, and selectively reflects the signal, and
   the calculation unit changes the position of the reflection unit on the basis of a comparison result between the signal received by the reception unit in a case where the reflection unit reflects the signal and the signal received by the reception unit in a case where the reflection unit does not reflect the signal.
[11] The signal processing device according to any one of [1] to [10], further including
   a plurality of the reflection units, in which
   the calculation unit calculates the position information on the basis of the signal received by the reception unit and a positional relationship between the reception unit and each of the reflection units.
[12] The signal processing device according to any one of [1] to [11], in which
   each of the reflection units selectively reflects the signal, and
   the calculation unit calculates position information on the object on the basis of a comparison result between a first signal received by the reception unit in a case where the reflection unit reflects the signal and a second signal received by the reception unit in a case where the reflection unit does not reflect the signal.
[13] The signal processing device according to any one of [1] to [12], in which
   the reflection unit includes a meta-surface.
[14] The signal processing device according to any one of [1] to [13], in which
   the reflection unit includes at least one material selected from gold, silver, copper, and aluminum.
[15] The signal processing device according to any one of [1] to [14], in which
   when the signal is a radar signal, the reflection unit is a corner reflector.
[16] The signal processing device according to any one of [1] to [15], in which
   when the signal is a wireless communication signal, the reflection unit is planar.
[17] The signal processing device according to any one of [1] to [16], in which
   a biological information of a human is measured.
[18] The signal processing device according to [17], in which
   at least one of a heart rate and a pulse of a human is measured.
[19] A measurement device including:
   a transmission unit that transmits a signal toward an object;
   a reception unit that receives a signal from the object;
   a reflection unit that reflects the signal toward the object or the reception unit; and
   a calculation unit that calculates position information on the object, in which
   the calculation unit calculates the position information on the basis of the signal received by the reception unit and a positional relationship between the reception unit and the reflection unit.
[20] A signal processing method including:
   receiving a signal from an object;
   reflecting the signal toward the object or a position where the signal has been received; and
   calculating position information on the object on the basis of the received signal and a positional relationship between the position where the signal has been received and a position where the signal has been reflected.

### REFERENCE SIGNS LIST

- 100: Signal processing device
- 1: Reception unit (first transmission/reception unit)
- 2: Object (second transmission/reception unit)
- 21: First object
- 22: Second object
- 23: Second object
- 21a: First virtual object
- 22a: Second virtual object
- 23a: Third virtual object
- 3: Reflection unit
- 31: First reflection unit
- 32: Second reflection unit
- 4: Calculation unit
- 6: Transmission unit
- 1000: Measurement device
- S1: Receiving signal from object
- S2: Reflecting signal toward object or reception unit
- S3: Calculating position information on object

## Claims

1. A signal processing device comprising:
a reception unit that receives a signal from an object;
a reflection unit that reflects the signal toward the object or the reception unit; and
a calculation unit that calculates position information on the object, wherein
the calculation unit calculates the position information on a basis of the signal received by the reception unit and a positional relationship between the reception unit and the reflection unit.

2. The signal processing device according to claim 1, wherein
the reflection unit selectively reflects the signal.

3. The signal processing device according to claim 2, wherein
the calculation unit selects reflection or non-reflection of the reflection unit on a basis of a comparison result between the signal received by the reception unit in a case where the reflection unit reflects the signal and the signal received by the reception unit in a case where the reflection unit does not reflect the signal.

4. The signal processing device according to claim 1, wherein
the reflection unit is arranged at a position farther than the reception unit with respect to the object.

5. The signal processing device according to claim 1, wherein
when the signal is a radar signal,
the reception unit receives a first radar signal transmitted from a transmission unit to an object and reflected by the object,
the reflection unit reflects the first radar signal toward the object, and
the calculation unit calculates position information on the object on a basis of the first radar signal, a second radar signal obtained by reflecting the first radar signal by the object, and a positional relationship between the reception unit and the reflection unit.

6. The signal processing device according to claim 5, further comprising
a plurality of the reception units, wherein
the calculation unit calculates position information on the object on a basis of a positional relationship between the reception units and the first radar signal and the second radar signal received by the reception units.

7. The signal processing device according to claim 1, wherein
when the signal is a wireless communication signal, the reception unit is a first transmission/reception unit, and the object is a second transmission/reception unit,
the first transmission/reception unit transmits the wireless communication signal toward the second transmission/reception unit,
the second transmission/reception unit receives the wireless communication signal from the first transmission/reception unit and transmits a first wireless communication signal toward the first transmission/reception unit and the reflection unit,
the reflection unit reflects the wireless communication signal from the second transmission/reception unit toward the first transmission/reception unit, and
the calculation unit calculates position information on the second transmission/reception unit on a basis of the first wireless communication signal, a second wireless communication signal obtained by reflecting the first wireless communication signal by the reflection unit, and a positional relationship between the reception unit and the reflection unit.

8. The signal processing device according to claim 7, further comprising
a plurality of the first transmission/reception units, wherein
the calculation unit calculates position information on the object on a basis of a positional relationship between the first transmission/reception units and the first wireless communication signal and the second wireless communication signal received by the first transmission/reception units.

9. The signal processing device according to claim 7, further comprising
a plurality of the first transmission/reception units, wherein
the calculation unit calculates position information on the object on a basis of a time difference or a phase difference between the first wireless communication signal and the second wireless communication signal received by each of the first transmission/reception units, or both of them.

10. The signal processing device according to claim 1, wherein
the reflection unit is positionally changeable, and selectively reflects the signal, and
the calculation unit changes the position of the reflection unit on a basis of a comparison result between the signal received by the reception unit in a case where the reflection unit reflects the signal and the signal received by the reception unit in a case where the reflection unit does not reflect the signal.

11. The signal processing device according to claim 1, further comprising
a plurality of the reflection units, wherein
the calculation unit calculates the position information on a basis of the signal received by the reception unit and a positional relationship between the reception unit and each of the reflection units.

12. The signal processing device according to claim 1, wherein
each of the reflection units selectively reflects the signal, and
the calculation unit calculates position information on the object on a basis of a comparison result between a first signal received by the reception unit in a case where the reflection unit reflects the signal and a second signal received by the reception unit in a case where the reflection unit does not reflect the signal.

13. The signal processing device according to claim 1, wherein
the reflection unit includes a meta-surface.

14. The signal processing device according to claim 1, wherein
the reflection unit contains at least one material selected from gold, silver, copper, and aluminum.

15. The signal processing device according to claim 1, wherein
when the signal is a radar signal, the reflection unit is a corner reflector.

16. The signal processing device according to claim 1, wherein
when the signal is a wireless communication signal, the reflection unit is planar.

17. The signal processing device according to claim 1, wherein
a biological information of a human is measured.

18. The signal processing device according to claim 17, wherein
at least one of a heart rate and a pulse of a human is measured.

19. A measurement device comprising:
a transmission unit that transmits a signal toward an object;
a reception unit that receives a signal from the object;
a reflection unit that reflects the signal toward the object or the reception unit; and
a calculation unit that calculates position information on the object, wherein
the calculation unit calculates the position information on a basis of the signal received by the reception unit and a positional relationship between the reception unit and the reflection unit.

20. A signal processing method comprising:
receiving a signal from an object;
reflecting the signal toward the object or a position where the signal has been received; and
calculating position information on the object on a basis of the received signal and a positional relationship between the position where the signal has been received and a position where the signal has been reflected.
